# EUROPEAN PATENT SPECIFICATION

(11) **EP 2 200 164 B1**
(45) Date of publication and mention of the grant of the patent: **16.05.2018**
(21) Application number: 08757799.5
(22) Date of filing: 20.06.2008
(51) Int. Cl.: H02M 3/335

(54) **DIRECT CURRENT CONVERTER POWER SUPPLY APPARATUS AND METHOD FOR IMPROVING DIRECT CURRENT CONVERTER POWER SUPPLY APPARATUS**
GLEICHSTROMWANDLER-STROMVERSORGUNGSVORRICHTUNG UND VERFAHREN ZUR VERBESSERUNG EINER GLEICHSTROMWANDLER-STROMVERSORGUNGSVORRICHTUNG
DISPOSITIF D'ALIMENTATION DE CONVERTISSEUR DE COURANT CONTINU ET PROCÉDÉ POUR AMÉLIORER UN TEL DISPOSITIF

(30) Priority: 26.09.2007 CN 200710151684
(43) Date of publication of application: 23.06.2010
(73) Proprietor: Huawei Technologies Co., Ltd., Longgang District Shenzhen, Guangdong 518129 (CN)
(72) Inventor: LIU, Zhihua, Shenzhen Guangdong 518129 (CN)
(74) Representative: Isarpatent
(86) International application number: PCT/CN2008/071390
(87) International publication number: WO 2009/039733

(56) References cited:
- EP-A2- 0 189 680
- CN-A- 1 285 971
- CN-C- 1 067 498
- GB-A- 2 346 744
- GB-A- 2 364 605
- JP-A- 2002 165 454
- US-A- 5 119 284
- US-A- 6 025 999
- US-A1- 2001 002 171
- US-A1- 2006 119 185

## Description

### Field of the Invention

The present invention relates to electronic technologies, and in particular, to a Direct Current to Direct Current (DC-DC) power supply apparatus and a method for improving a DC-DC power supply apparatus.

### Background of the Invention

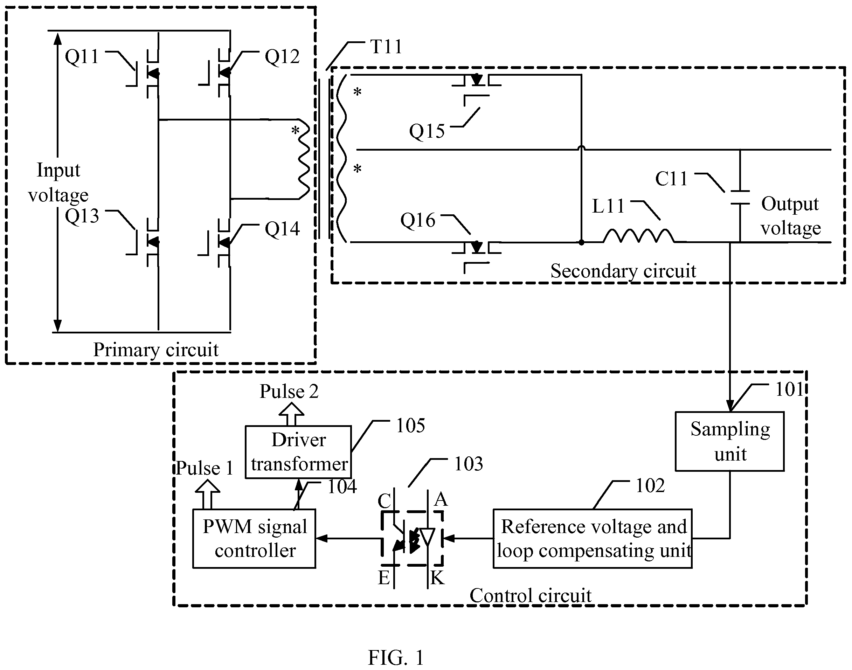

A common isolation DC-DC high-frequency switch power supply, as a DC converter, usually adopts a full-bridge isolation transformation topology. FIG. 1 shows a circuit structure of an isolation DC-DC high-frequency switch power supply.

This circuit includes: a primary circuit, a secondary circuit, and a control circuit. As shown in FIG. 1, the circuit coupled to the primary winding of an isolation primary transformer T11 is the primary circuit; the circuit connected to the voltage output port of the isolation primary transformer T11 is the secondary circuit; the control circuit includes: a sampling unit 101, a reference voltage and loop compensating unit 102, a feedback isolation optocoupler 103, a Pulse-Width Modulation (PWM) signal controller 104, and a driver transformer 105.

The Metal Oxide Semiconductor (MOS) transistors Q11, Q12, Q13, and Q14 located on the primary circuit constitute two bridge arms of the full-bridge isolation transformation primary circuit. The PWM pulse 1 output by the PWM signal controller 104 of the control circuit drives the gate electrode of the MOS transistors Q11, Q12, Q13, and Q14 to control the on/off state of the MOS transistors.

The MOS transistors Q15 and Q16 are synchronous rectifier MOS transistors of the full-bridge isolation transformation secondary circuit, and may be replaced with diodes in the case that the output voltage is relatively high or the output current is relatively weak. L11 is an output energy storage and filter inductor; C11 is an output energy storage and filter capacitor; and Q15, Q16, L11, and C11 constitute a full-wave rectifier circuit of the full-bridge isolation transformation secondary circuit.

When a high voltage exists at a T11 port connected to the rectifier transistor Q15, the synchronous rectification of Q15 is turned on; when a high voltage exists at a T11 port connected to the rectifier transistor Q16, the synchronous rectification of Q16 is turned on. The driving signals output by the PWM signal controller 104 of the control circuit are fed into the secondary circuit through a driver transformer 105, and a PWM pulse 2 is generated to control the synchronous rectifier MOS transistors Q15 and Q16. The MOS transistors may also be controlled by the driving signals generated by other circuits. For example, windings are added to the transformer to perform self driving.

In practice, the voltage output by the isolation DC-DC high-frequency switch power supply is variable due to the impact from the change of the power supply load. In this case, the isolation DC-DC high-frequency switch power supply needs to be adjusted, and the output voltage needs to be stabilized. In FIG. 1, the sampling unit 101 performs sampling for the output voltage. When the output voltage changes, the signals collected by the sampling unit 101 are transmitted to the reference voltage and loop compensating unit 102. After the signals are processed, the signals are sent by the feedback isolation optocoupler 103 to the PWM signal controller 104 located on the control circuit. The PWM signal controller 104 outputs the changed PWM pulse signals, namely, the preceding PWM pulse 1 and PWM pulse 2, where the PWM pulse 1 is configured to adjust the duty ratio of Q11, Q12, Q13, and Q14, and the PWM pulse 2 is configured to adjust the duty ratio of Q15 and Q16 to obtain the required DC voltage.

By researching and improving the conventional technology, the inventor finds the prior art has at least the following defects:
1. While adjusting the output voltage of the power supply according to the signals collected by the sampling unit 101, the transformer T11 participates in the adjustment. In the adjustment, the working state of the transformer T11 changes in each cycle. When the change frequency of the working state of the transformer T11 falls within the audio range, the transformer tends to howl and generate noises.
2. While adjusting the output voltage of the power supply according to the signals collected by the sampling unit 101, the signals transmitted through the isolation optocoupler 103 have a certain delay, which leads to a low capability of dynamically adjusting the output voltage of the entire circuit. Moreover, the inherent working bandwidth of the isolation optocoupler 103 is narrow, which leads to a relatively narrow system bandwidth of the isolation DC-DC high-frequency switch power supply. In the real-time adjustment of the
   output voltage, the response speed of the supply voltage is low. When the load changes rapidly, the recovery speed of the supply voltage is low.

### Summary of the Invention

Some embodiments of the present invention provide a DC-DC power supply apparatus and a method for improving a DC-DC power supply apparatus to enhance the dynamic performance of the DC-DC power supply.

A DC-DC power supply apparatus provided in an embodiment of the present invention includes:
a transformer;
a transformer primary circuit;
a transformer secondary circuit, which includes a rectifier circuit capable of transformation and configured to transform a square-wave voltage output by the transformer into a DC output voltage; and
a control unit, configured to monitor the change of the DC output voltage, to collect a change signal once the DC output voltage changes, and to control the transformer secondary circuit according to the change signal to stabilize the DC output voltage to a required value according to the DC output voltage;
the rectifier circuit capable of transformation is a buck rectifier circuit;
the buck rectifier circuit comprises: a first energy storage and filter inductor, a first energy storage and filter capacitor, a first bidirectional controllable switch unit, and a third switch unit; and
the first bidirectional controllable switch unit is connected between a voltage output port of a secondary winding of the transformer and the third switch unit; one port of the first energy storage and filter inductor is connected to one port of the third switch unit connected with the first bidirectional controllable switch unit; another port of the first energy storage and filter inductor is connected to one port of the first energy storage and filter capacitor; another port of the first energy storage and filter capacitor is connected to another port of the third switch unit; and another port of the third switch unit is connected to another port of the secondary winding of the transformer; the other port of the secondary winding of the transformer is a center tap of the secondary winding of the transformer;
the control unit comprises a sampling unit, a reference voltage and loop compensating unit, a PWM signal controller and an isolation transmitting unit,
the sampling unit is adapted to monitor a change of the DC output voltage and to send a change signal collected by the sampling unit to the reference voltage and loop compensating unit if the DC output voltage changes,
the reference voltage and loop compensating unit, is adapted to process the change signal and to transmit the processed change signal to the PWM signal controller,
the PWM signal controller is adapted to adjust PWM pulses according to the processed change signal, the adjusted PWM pulse adjusts the rectifier circuit capable of composite functions to adjust the output DC voltage and obtain the required DC voltage, and the PWM signal controller is adapted to output a PWM signal to the isolation transmitting unit;
the isolation transmitting unit is adapted to transmit the PWM signal to the primary circuit to generate a PWM pulse of a constant duty ratio;
wherein the bidirectional controllable switch unit comprises:
a first switch unit and a second switch unit, wherein: a source electrode of the first switch unit is connected to the voltage output port of the secondary winding of the transformer, and a drain electrode of the first switch unit is connected to a drain electrode of the second switch unit.

As seen from the foregoing technical solution, no isolation component like a transformer or an isolation optocoupler needs to participate in the process of adjusting the DC output voltage; instead, the control unit directly controls a rectifier circuit capable of transformation to adjust the DC output voltage. Because a transformer does not need to participate in the feedback loop, no noise is generated by the change of the working state of the transformer in the adjustment. In addition, because no isolation component like the isolation optocoupler needs to participate in the adjustment process, no delay is caused by the isolation component. Thus, the speed of response to the feedback signal is increased, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly. Therefore, the dynamic performance of the DC-DC power supply is enhanced.

### Brief Description of the Drawings

FIG. 1 is a circuit diagram of a DC-DC power supply in the prior art;
FIG. 2 is a circuit diagram of a DC-DC power supply apparatus according to Embodiment 1 of the present invention;
FIG. 3 is a working sequence diagram of a DC-DC power supply apparatus according to Embodiment 1 of the present invention;
FIG. 4 is an equivalent circuit diagram of a secondary circuit of a DC-DC power supply apparatus in a T1 period according to Embodiment 1 of the present invention;
FIG. 5 is an equivalent circuit diagram of a secondary circuit of a DC-DC power supply apparatus in a T4 period according to Embodiment 1 of the present invention;
FIG. 6 is a circuit diagram of a DC-DC power supply apparatus according to Embodiment 2 of the present invention;
FIG. 7 is a working sequence diagram of a DC-DC power supply apparatus according to Embodiment 2 of the present invention;
FIG. 8 is an equivalent circuit diagram of a secondary circuit of a DC-DC power supply apparatus in a T71 period according to Embodiment 2 of the present invention;
FIG. 9 is an equivalent circuit diagram of a secondary circuit of a DC-DC power supply apparatus in a T74 period according to Embodiment 2 of the present invention;
FIG. 10 is a circuit diagram of a DC-DC power supply apparatus according to Embodiment 3 of the present invention;
FIG. 11 is a circuit diagram of a DC-DC power supply apparatus according to Embodiment 4 of the present invention;
FIG. 12 is a circuit diagram of a DC-DC power supply apparatus according to Embodiment 5 of the present invention;
FIG. 13 is a circuit diagram of a DC-DC power supply apparatus according to Embodiment 6 of the present invention;
FIG. 14 is a circuit diagram of a DC-DC power supply apparatus according to Embodiment 7 of the present invention;
FIG. 15 is a two-phase buck converter circuit diagram; and
FIG. 16 is a boost converter circuit diagram.

### Detailed Description of the Embodiments

Some embodiments of the present invention provide a method for improving a DC-DC power supply apparatus and provide a DC-DC power supply apparatus. According to some embodiments, a rectifier circuit capable of transformation is coupled to a secondary winding of a transformer to participate in feedback adjustment, and the required DC voltage is obtained by adjusting the circuit directly.

A DC-DC power supply apparatus provided in an embodiment of the present invention includes: a transformer, a transformer primary circuit, a transformer secondary circuit, and a control unit.

The circuit coupled to the primary winding of a transformer is the transformer primary circuit.

The circuit coupled to the secondary winding of the transformer is the transformer secondary circuit. In one embodiment, the transformer secondary circuit is a rectifier circuit capable of transformation and configured to transform the square-wave voltage output by the transformer into a DC output voltage.

If the secondary winding of the transformer has a center tap, the rectifier circuit coupled to the secondary winding of the transformer and capable of transformation may perform full-wave rectification for the square wave output by the transformer and output one DC voltage, or may rectify the output voltage in the positive half cycle and the negative half cycle separately to obtain two DC output voltages.

If the transformer has a reset coil, the rectifier circuit coupled to the secondary winding of the transformer and capable of direct transformation may perform half-wave rectification for the square wave output by the transformer and output one DC voltage.

If multiple voltages need to be output, more windings may be added. A rectifier circuit capable of direct transformation may be coupled to each added winding.

The control unit is configured to control the transformer secondary circuit to stabilize the DC output voltage to a required value according to the DC output voltage.

No isolation component like a transformer or an isolation optocoupler needs to participate in the process of adjusting the DC output voltage; instead, the control unit directly controls a rectifier circuit capable of transformation to adjust the DC output voltage. Because the transformer does not need to participate in the feedback loop, no noise is generated by the change of the working state of the transformer in the adjustment. In addition, because no isolation component like the isolation optocoupler needs to participate in the adjustment process, no delay is caused by the isolation component. Thus, the speed of response to the feedback signal is increased, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly. Therefore, the dynamic performance of the DC-DC power supply is enhanced considerably.

In one embodiment, the rectifier circuit coupled to the second winding of the transformer and capable of direct transformation is generally a buck rectifier circuit, or may be a boost rectifier circuit on some occasions. The buck rectifier circuit is prevalent because it has few ripples and is highly controllable. The description herein takes the buck rectifier circuit as an example.

In the embodiments of the present invention, both the positive half cycle output port and the negative half cycle output port of the secondary winding of the transformer are referred as voltage output ports of the secondary winding of the transformer.

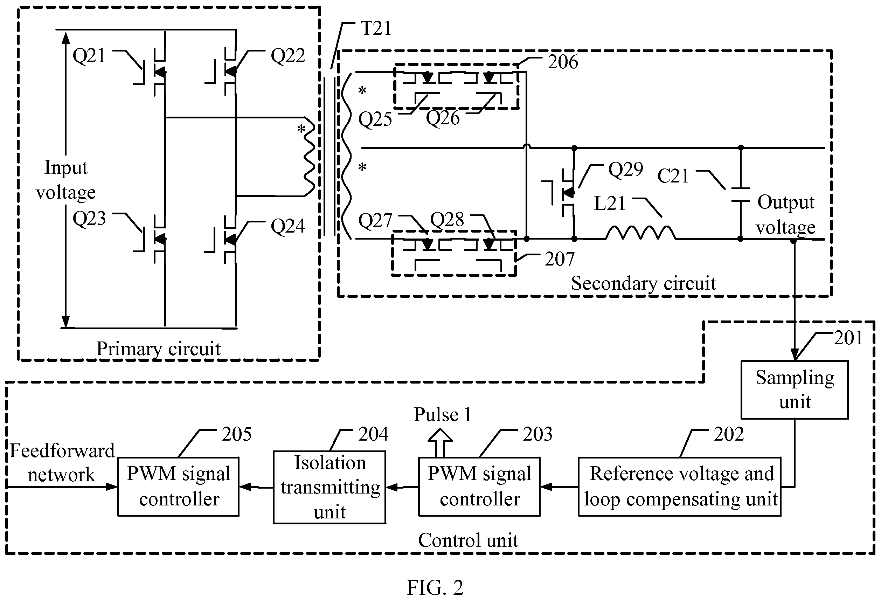

In the DC-DC power supply apparatus in the Embodiment 1 of the present invention, the primary circuit adopts a full-bridge topology, and the secondary winding of the transformer has a center tap. FIG. 2 is a circuit diagram of the apparatus.

The circuit includes: a primary circuit, a secondary circuit, and a control unit. The secondary winding of the isolation primary transformer T21 connected to the primary circuit and the secondary circuit has a center tap.

The circuit coupled to the primary winding of the isolation primary transformer T21 is referred as the transformer primary circuit. The MOS transistors Q21, Q22, Q23, and Q24 constitute two bridge arms of the transformer primary circuit. The structure of the primary circuit is a full-bridge topology structure.

Pulse signals of a constant duty ratio may be used to control the on/off state of the MOS transistors Q21, Q22, Q23, and Q24 of the primary circuit of the DC-DC power supply apparatus according to the actual application conditions, or a primary circuit may be used to control the on/off state for the purpose of fine tuning.

When controlling the on/off state through a primary circuit for the purpose of fine tuning, the DC-DC power supply apparatus may use a feedforward network to control the PWM signal controller 205 in the control unit to generate PWM pulses, and drive the gate electrodes of Q21, Q22, Q23, and Q24 to control the on/off state for the purpose of fine tuning.

When using pulse signals of a constant duty ratio to control the on/off state, the DC-DC power supply apparatus provides a pulse of a constant duty ratio to drive the gate electrode of Q21, Q22, Q23, and Q24 and control the on/off state. Taking FIG. 2 as an example, a PWM signal controller 203 in the control unit may output a PWM signal, and an isolation transmitting unit 204 transmits the PWM signal to the primary circuit to generate a PWM pulse of a constant duty ratio, and the PWM pulse drives the gate electrode of Q21, Q22, Q23, and Q24 to control the on/off state. Alternatively, a PWM signal controller 205 directly generates a PWM pulse of a constant duty ratio to drive the gate electrode of Q21, Q22, Q23, and Q24 and control the on/off state. Alternatively, the PWM pulse is generated by another apparatus capable of generating pulse signals. If a PWM signal controller 203 is used to output PWM pulses, the PWM signal controller 205 in this circuit diagram is not required. If the pulses are generated by a PWM signal controller 205 or another apparatus, the isolation transmitting unit 204 in this circuit diagram is not required, and the duty ratio of the pulse that drives the gate electrode of Q21, Q22, Q23, and Q24 may be 50% or another value.

The circuit coupled to the secondary winding of the isolation primary transformer T21 is referred as a transformer secondary circuit. The transformer secondary circuit is a buck rectifier circuit capable of composite functions, and the L21 located on the transformer secondary circuit is an energy storage and filter inductor of the buck converter circuit capable of composite functions. C21 is an output energy storage and filter capacitor. The bidirectional controllable switch unit 206 includes MOS transistors Q25 and Q26. The source electrode of Q25 is connected to the positive half cycle output port of the secondary winding of the transformer T21, and receives the output from the positive half cycle of the transformer secondary circuit. The drain electrode of Q25 is connected to the drain electrode of the MOS transistor Q26, and the source electrode of Q26 is connected to the source electrode of Q28 and the drain electrode of Q29. The bidirectional controllable switch unit 207 includes MOS transistors Q27 and Q28. The source electrode of Q27 is connected to the negative half cycle output port of the secondary winding of the transformer T21, and receives the output from the negative half cycle of the transformer secondary circuit. The drain electrode of Q27 is connected to the drain electrode of the MOS transistor Q28, and the source electrode of Q28 is connected to the source electrode of Q26 and the drain electrode of Q29, while the source electrode of Q29 is connected to C21 and the center tap of the secondary winding of the transformer T21. The other port of L21 and the other port of C21 are connected together as a voltage output port, the voltage from which is a power supply output voltage. Q25, Q26, Q29, L21, and C21 constitute the positive half cycle of buck conversion in the buck converter circuit capable of composite functions in the transformer secondary circuit; and Q27, Q28, Q29, L21, and C21 constitute the negative half cycle of buck conversion in the buck converter circuit capable of composite functions in the transformer secondary circuit.

The sampling unit 201 in the control unit monitors the change of the output voltage. Once the output voltage changes, the change signal collected by the sampling unit 201 is sent to the reference voltage and loop compensating unit 202. After being processed, the signal is transmitted to the PWM signal controller 203. The PWM signal controller 203 adjusts the output PWM pulse 1 according to the processed change signal. The adjusted pulse 1 drives the gate electrode of Q25, Q26, Q27, Q28, and Q29 and adjusts the buck converter circuit capable of composite functions to adjust the output DC voltage and obtain the required DC voltage.

In this embodiment, L21 is also referred as the first energy storage and filter inductor; C21 is also referred as the first energy storage and filter capacitor; the bidirectional controllable switch unit 206 is also referred as the first bidirectional controllable switch unit; the bidirectional controllable switch unit 207 is also referred as the second bidirectional controllable switch unit; and Q29 is also referred as the third switch unit.

In this embodiment, no isolation component like a transformer or an isolation optocoupler needs to participate in the feedback loop to adjust the output voltage; instead, a buck rectifier circuit capable of composite functions serves as a secondary circuit to participate in the feedback loop and adjust the output voltage. Because the transformer does not need to participate in the adjustment process, no noise is generated by the change of the working state of the transformer in each cycle. In addition, because no isolation component like the isolation optocoupler needs to participate in the feedback loop, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, the MOS transistors Q25 and Q26 as well as the MOS transistors Q27 and Q28 may be any fully controllable switch units, for example, bidirectional controllable MOS Field Effect Transistors (MOSFETs), Insulated Gate Bipolar Transistors (IGBTs), and Gate Turn-Off Thyristors (GTOs). The MOS transistors are generally MOSFETs in the high-frequency DC/DC transformation switch power supply. The MOS transistors Q25 and Q26 as well as the MOS transistors Q27 and Q28 in FIG. 2 are a bidirectional controllable MOSFET switch combination.

Q29 in FIG. 2 may be replaced with a diode in the case that the output voltage is high or the current is weak.

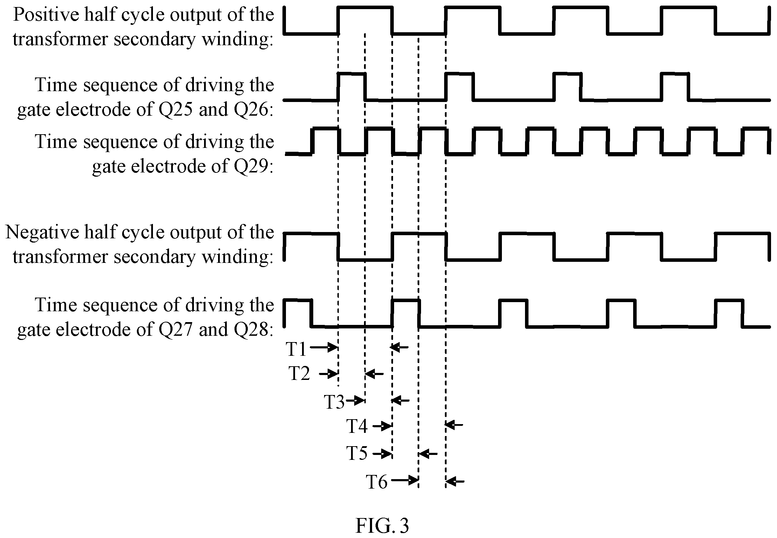

FIG. 3 shows the working sequence of the MOS transistors in a working cycle in the buck converter circuit capable of composite functions in the transformer secondary circuit shown in FIG. 2.

The T1 period includes two periods: T2 and T3. In the T1 period, the secondary positive half cycle of the transformer outputs a high voltage, and the gate electrodes of Q25 and Q26 are at a high level in the T2 period and at a low level in the T3 period; the gate electrode of Q29 is at a low level in the T2 period and at a high level in the T3 period; the secondary negative half cycle of the transformer outputs a low voltage; the gate electrodes of Q27 and Q28 are at a low level; in the entire T1 period, Q25, Q26, Q29, L21, and C21 work in the buck conversion state, and Q27 and Q28 are in the off state.

The T4 period includes two periods: T5 and T6. In the T4 period, the secondary positive half cycle of the transformer outputs a low voltage, and the gate electrodes of Q25 and Q26 are at a low level; the gate electrode of Q29 is at a low level in the T5 period, and is at a high level in the T6 period; the secondary negative half cycle of the transformer outputs a high voltage; the gate electrodes of Q27 and Q28 are at a high level in the T5 period and at a low level in the T6 period; in the entire T4 period, Q27, Q28, Q29, L21, and C21 work in the buck conversion state, and Q25 and Q26 are in the off state.

In the T1 period, the positive half cycle of the transformer secondary circuit connected to Q25 outputs a high voltage, and the Q27 transistor and the Q28 transistor are turned off because all the gate drives are of a low level. In this case, Q25, Q26, Q29, L21, and C21 constitute a buck converter circuit, and this buck converter circuit directly chops the square-wave level output by the transformer.

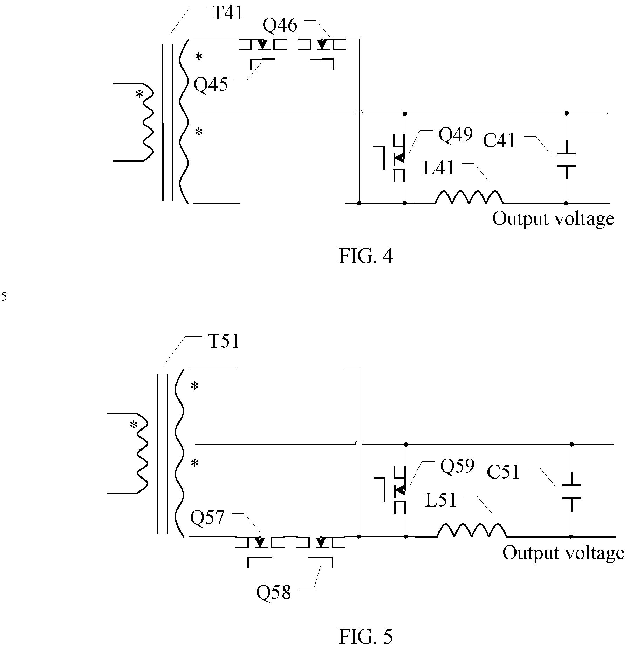

FIG. 4 shows an equivalent circuit diagram of a transformer secondary circuit of a DC-DC power supply apparatus in a T1 period according to Embodiment 1 of the present invention.

In FIG. 4, T41 is equivalent to T21 in FIG. 2; Q45, Q46, and Q49 are equivalent to Q25, Q26, and Q29 in FIG. 2; L41 is equivalent to L21 in FIG. 2; and C41 is equivalent to C21 in FIG. 2.

In the T2 period, Q49 is turned off, and the current flows through the windings in the positive half cycle of the secondary circuit of the transformer T41 as well as Q45, Q46, L41, and C41, and, if any load is connected to the power supply, the current further flows through the load connected to the power supply. In such case, a certain amount of energy is stored by L41 and C41, and the voltage output port outputs the voltage to the load.

The flow direction of the current is as follows: a positive level is output from the positive half cycle of the transformer secondary circuit, and then flows through Q45, Q46, L41, and C41, and finally the voltage output port outputs a high voltage.

In the T3 period, the current flows through Q49, L41, and C41; and, if any load is connected to the power supply, the current further flows through the load connected to the power supply. In such case, the energy in the circuit loop comes from the energy stored by L41 and C41 in the T2 period. The voltage output port outputs a voltage to the load.

At this time, L41 and C41 begin to discharge electricity. The current flows from L41 to C41 and then to Q49. The voltage output port outputs a high voltage.

As shown in FIG. 2, in the T4 period, the negative half cycle of the transformer secondary circuit connected to Q27 outputs a high voltage, and the Q25 transistor and the Q26 transistor are turned off because all the gate drives are at a low level. In such case, Q27, Q28, Q29, L21 and C21 constitute a buck converter circuit, and this buck converter circuit directly chops the square-wave level output by the transformer.

FIG. 5 is an equivalent circuit diagram of a transformer secondary circuit of a DC-DC power supply apparatus in a T4 period according to Embodiment 1 of the present invention.

In FIG. 5, T51 is equivalent to T21 in FIG. 2; Q57, Q58, and Q59 are equivalent to Q27, Q28, and Q29 in FIG. 2; L51 is equivalent to L21 in FIG. 2; and C51 is equivalent to C21 in FIG. 2.

In the T5 period, Q59 is turned off, and the current flows through the windings in the negative half cycle of the secondary circuit of the transformer T51 as well as Q57, Q58, L51, and C51, and, if any load is connected to the power supply, the current further flows through the load connected to the power supply. In such case, a certain amount of energy is stored by L51 and C51, and the voltage output port outputs the voltage to the load.

The flow direction of the current is: a positive level is output from the negative half cycle of the transformer secondary circuit, and then flows through Q57, Q58, L51, and C51, and finally the voltage output port outputs a high voltage.

In the T6 period, the current flows through Q59, L51, and C51; and, if any load is connected to the power supply, the current further flows through the load connected to the power supply. In such case, the energy in the circuit loop comes from the energy stored by L51 and C51 in the T5 period, and the voltage output port outputs the voltage to the load.

At this time, L51 and C51 begin to discharge electricity. The current flows from L51 to C51 and then to Q59. The voltage output port outputs a high voltage.

As can be seen, in the T1 period and the T4 period, the voltage output port always outputs a high voltage, namely, the voltage that needs to be output by the power supply.

In the entire time sequence, the cycles similar to T1 and T4 recur to constitute a complete time sequence, and the rectangular square-wave power supply output by the transformer T21 is rectified by the buck converter circuit capable of the composite functions into a DC power supply.

The DC-DC power supply apparatus according to Embodiment 1 of the present invention may provide one output voltage. On some occasions, however, a power supply apparatus needs to provide multiple output voltages. A DC-DC power supply apparatus provided according to Embodiment 2 of the present invention is capable of providing two output voltages.

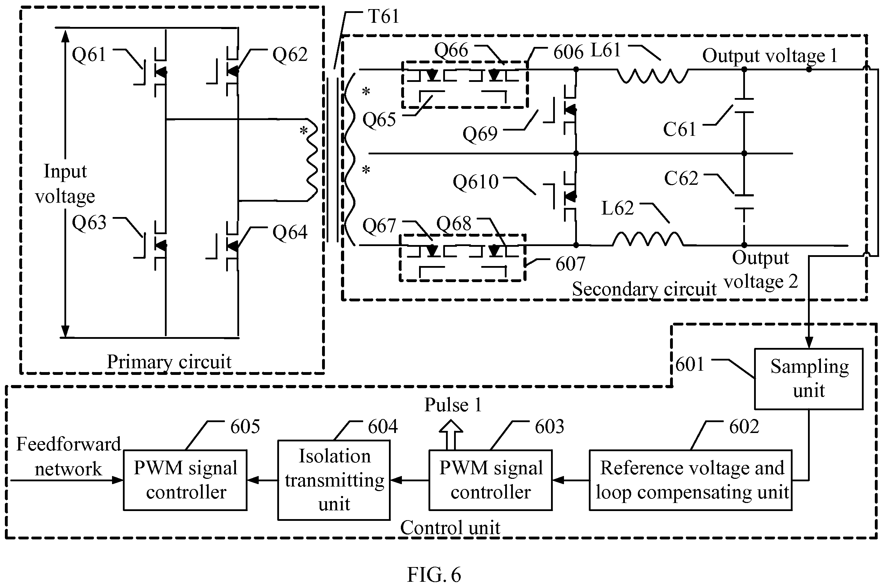

FIG. 6 is a circuit diagram of a DC-DC power supply apparatus according to Embodiment 2 of the present invention.

The circuit includes: a primary circuit, a secondary circuit, and a control unit. The secondary winding of the isolation primary transformer T21 connected to the primary circuit and the secondary circuit has a center tap.

The circuit coupled to the primary winding of the isolation primary transformer T61 is referred as the transformer primary circuit. The MOS transistors Q61, Q62, Q63, and Q64 constitute two bridge arms of the transformer primary circuit. The structure of this primary circuit is referred as a full-bridge topology structure.

Pulse signals of a constant duty ratio may be used to control the on/off state of the MOS transistors Q61, Q62, Q63, and Q64 of the primary circuit of the DC-DC power supply apparatus according to the actual application conditions, or a primary circuit may be used to control the on/off state for the purpose of fine tuning.

By controlling the on/off state through a primary circuit for the purpose of fine tuning, the DC-DC power supply apparatus may use a feedforward network to control the PWM signal controller 605 in the control unit to generate PWM pulses, and drive the gate electrode of Q61, Q62, Q63, and Q64 to control the on/off state for the purpose of fine tuning.

By using pulse signals of a constant duty ratio to control the on/off state, this DC-DC power supply apparatus provides a pulse of a constant duty ratio to drive the gate electrodes of Q61, Q62, Q63, and Q64 and control the on/off state. Taking FIG. 6 as an example, a PWM signal controller 603 in the control unit may output a PWM signal, and an isolation transmitting unit 604 transmits the PWM signal to the primary circuit to generate a PWM pulse of a constant duty ratio, and the PWM pulse drives the gate electrodes of Q61, Q62, Q63, and Q64 to control the on/off state. Alternatively, a PWM signal controller 605 directly generates a PWM pulse of a constant duty ratio to drive the gate electrodes of Q61, Q62, Q63, and Q64 and control the on/off state. Alternatively, the PWM pulse is generated by another apparatus capable of generating pulse signals. In the case that the PWM signal controller 603 is used to output PWM pulses, the PWM signal controller 605 in this circuit diagram is not required; in the case that the pulses are generated by a PWM signal controller 605 or another apparatus, the isolation transmitting unit 604 in this circuit diagram is not required, and the duty ratio of the pulse that drives the gate electrodes of Q61, Q62, Q63, and Q64 may be 50% or another value.

The circuit coupled to the secondary winding of the primary transformer T61 is referred as a transformer secondary circuit. The transformer secondary circuit is a composite rectifier circuit capable of buck conversion. Each side of this circuit outputs an output voltage independently, and the entire circuit has a total of two independent output voltages: output voltage 1 and output voltage 2.

L61 and L62 on the transformer secondary circuit are energy storage and filter inductors of the buck converter circuit capable of composite functions. C61 and C62 are output energy storage and filter capacitors. The bidirectional controllable switch unit 606 includes MOS transistors Q65 and Q66. The source electrode of Q65 is connected to the positive half cycle output port of the secondary winding of the transformer T61, and receives the output from the positive half cycle of the transformer secondary circuit. The drain electrode of Q65 is connected to the drain electrode of the MOS transistor Q66, and the source electrode of Q66 is connected to the drain electrode of Q69 and L61. The source electrode of Q69 is connected to C61, the source electrode of Q610, and the center tap of the secondary winding of the transformer T61. The other port of L61 and the other port of C61 are connected together as a voltage output port to output the output voltage 1. Q65, Q66, Q69, L61, and C61 constitute one buck converter circuit among the buck converter circuits capable of composite functions in the transformer secondary circuit. The bidirectional controllable switch unit 606 includes MOS transistors Q67 and Q68. The source electrode of Q67 is connected to the negative half cycle output port of the secondary winding of the transformer T61, and receives the output from the negative half cycle of the transformer secondary circuit. The drain electrode of Q67 is connected to the drain electrode of the MOS transistor Q68, and the source electrode of Q68 is connected to the drain electrode of Q610 and L62. The source electrode of Q610 is connected to C62, the source electrode of Q69, and the center tap of the secondary winding of the transformer T61. The other port of L62 and the other port of C62 are connected together as a voltage output port to output the output voltage 2. Q67, Q68, Q610, L62, and C62 constitute the other buck converter circuit among the buck converter circuits capable of composite functions in the transformer secondary circuit. Compared with FIG. 2, FIG. 6 includes Q69, L61, and C61 additionally, which combine with Q65 and Q66 into a buck converter circuit. This buck converter circuit and the other buck converter circuit perform transformation for the positive half cycle output and the negative half cycle output of the transformer separately to obtain two output voltages.

The sampling unit 601 in the control unit monitors the change of the output voltage. Once the output voltage changes, the change signal collected by the sampling unit 601 is sent to the reference voltage and loop compensating unit 602. After being processed, the signal is transmitted to the PWM signal controller 603. The PWM signal controller 603 adjusts the output PWM pulse 1 according to the processed change signal. The adjusted pulse 1 drives the gate electrodes of Q65, Q66, Q67, Q68, Q69, and Q610, and adjusts the buck converter circuit capable of composite functions to adjust the output DC voltage and obtain the required DC voltage.

In this embodiment, L61 is also referred as the first energy storage and filter inductor; C61 is also referred as the first energy storage and filter capacitor; L62 is also referred as the second energy storage and filter inductor; C62 is also referred as the second energy storage and filter capacitor; the bidirectional controllable switch unit 606 is also referred as the first bidirectional controllable switch unit; the bidirectional controllable switch unit 607 is also referred as the third bidirectional controllable switch unit; Q69 is also referred as the third switch unit; and Q610 is also referred as the fourth switch unit.

In this embodiment, no isolation component like a transformer or an isolation optocoupler needs to participate in the feedback loop to adjust the two output voltages; instead, a buck rectifier circuit capable of composite functions serves as a secondary circuit to participate in the feedback loop and adjust the output voltages. Because the transformer does not need to participate in the adjustment process, no noise is generated by the change of the working state of the transformer in each cycle. In addition, because no isolation component like the isolation optocoupler needs to participate in the rectification process, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, the MOS transistors Q65 and Q66 as well as the MOS transistors Q67 and Q68 may be any fully controllable switch units, for example, bidirectional controllable MOSFETs, IGBTs, and GTOs. The MOS transistors are generally MOSFETs in the high-frequency DC/DC transformation switch power supply. The MOS transistors Q65 and Q66 as well as the MOS transistors Q67 and Q68 in FIG. 6 are a bidirectional controllable MOSFET switch combination.

Q69 and Q610 in FIG. 6 may be replaced with diodes in the case that the output voltage is high or the current is weak.

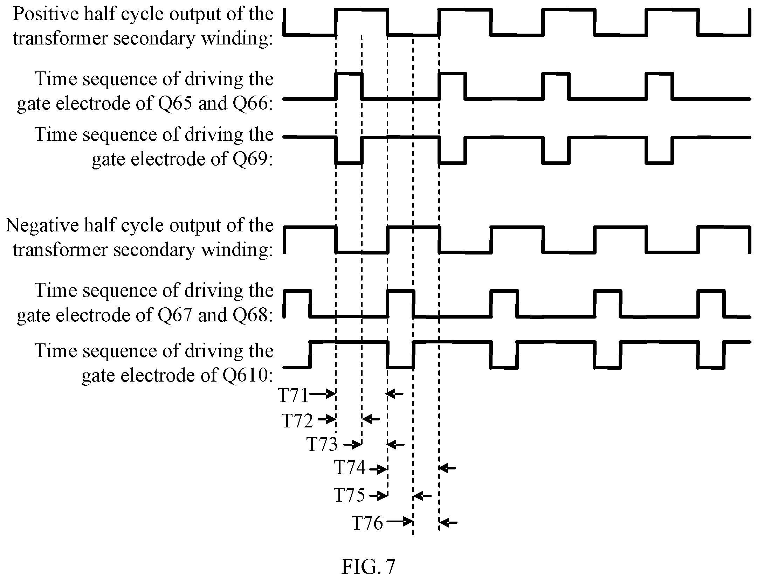

FIG. 7 shows the working sequence of the MOS transistors in a working cycle in the buck converter circuit capable of composite functions in the transformer secondary circuit shown in FIG. 6:
The T71 period includes two periods: T72 and T73. In the T71 period, the secondary positive half cycle of the transformer outputs a high voltage, and the gate electrodes of Q65 and Q66 are at a high level in the T72 period and at a low level in the T73 period; the gate electrode of Q69 is at a low level in the T72 period and at a high level in the T73 period; the secondary negative half cycle of the transformer outputs a low voltage; the gate electrodes of Q67 and Q68 are at a low level, and the gate electrode of Q610 is at a high level; in the entire T71 period, Q65, Q66, Q69, L61, and C61 work in the buck conversion state and constitute a buck converter circuit, and this buck converter circuit directly chops the square-wave level output by the transformer; Q67 and Q68 are turned off; and Q610 is turned on.

The T74 period includes two periods: T75 and T76. In the T74 period, the secondary positive half cycle of the transformer outputs a low voltage, and the gate electrodes of Q65 and Q66 are at a low level; the gate electrode of Q69 is at a high level; the secondary negative half cycle of the transformer outputs a high level; the gate electrodes of Q67 and Q68 are at a high level in the T75 period and at a low level in the T76 period; the gate electrode of Q610 is at a low level in the T75 period and is at a high level in the T76 period; in the entire T74 period, Q67, Q68, L610, L62, and C62 work in the buck conversion state and constitute a buck converter circuit, and this buck converter circuit directly chops the square-wave level output by the transformer; Q67 and Q66 are turned off; and Q69 is turned on.

In the T71 period, the positive half cycle of the transformer secondary circuit connected to Q65 outputs a high voltage, and the Q67 transistor and the Q68 transistor are turned off because all the gate drives are of a low level. In such case, Q65, Q66, Q69, L61 and C61 constitute a buck converter circuit, and this buck converter circuit directly chops the square-wave level output by the transformer.

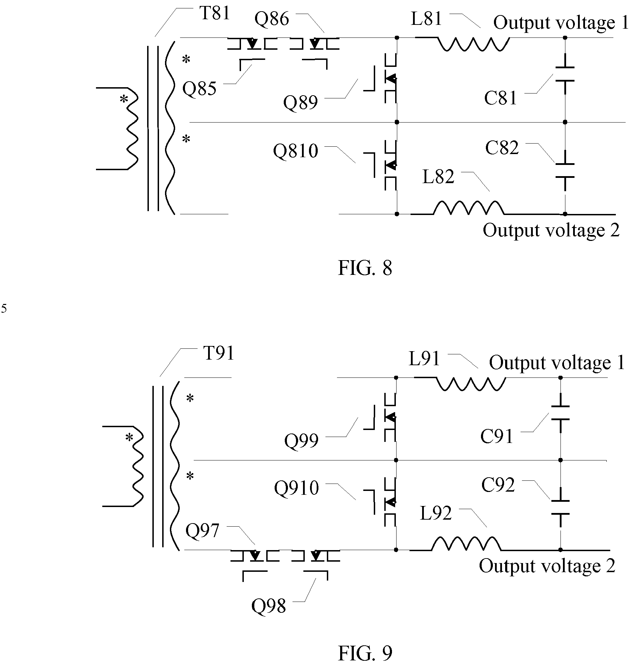

FIG. 8 shows an equivalent circuit diagram of a transformer secondary circuit of a DC-DC power supply apparatus in a T71 period according to Embodiment 2 of the present invention.

In FIG. 8, T81 is equivalent to T61 in FIG. 6; Q85, Q86, Q89, and Q810 are equivalent to Q65, Q66, Q69, and Q610 in FIG. 6; L81 and L82 are equivalent to L61 and L62 in FIG. 6; and C81 and C82 are equivalent to C61 and C62 in FIG. 6.

In the T72 period, Q89 is turned off, and two current loops exist in the circuit: the first current loop, and the second current loop.

The first current loop flows through the winding in the positive half cycle of the secondary circuit of the transformer T81 as well as Q85, Q86, L81, and C81, and, if any load is connected to the power supply, further flows through the load connected to the power supply. In such case, a certain amount of energy is stored by L81 and C81; the output voltage 1 port outputs a voltage to the load, and the flow direction of the current is: a positive level is output from the positive half cycle of the transformer secondary circuit, and then flows through Q85, Q86, L81, and C81; and the output voltage 1 port outputs a high voltage.

The second current loop flows through Q810, L82, and C82, and, if any load is connected to the power supply, further flows through the load connected to the power supply. In such case, Q810 is turned on, and performs fly wheeling for the corresponding buck circuit. The output voltage 2 is a high voltage.

In the T73 period, two current loops exist: the third current loop, and the fourth current loop.

The third current loop flows through Q89, L81, and C81, and, if any load is connected to the power supply, further flows through the load connected to the power supply. In this case, the energy in the circuit loop comes from the energy stored by L81 and C81 in the T72 period, and the output voltage 1 port outputs a voltage to the load; L81 and C81 begin to discharge electricity, and the current flows from L81 to C81 and then to Q89; and the output voltage 1 port outputs a high voltage.

The fourth current loop flows through Q810, L82, and C82, and, if any load is connected to the power supply, further flows through the load connected to the power supply. In this case, Q810 is turned on, and performs fly wheeling for the corresponding buck circuit. The output voltage 2 is a high voltage.

As shown in FIG. 6, in the T74 period, the negative half cycle of the transformer secondary circuit connected to Q67 outputs a high voltage, and the Q65 transistor and the Q66 transistor are turned off because all the gate drives are at a low level. In this case, Q67, Q68, Q610, L62 and C62 constitute a buck converter circuit, and this buck converter circuit directly chops the square-wave level output by the transformer.

FIG. 9 shows an equivalent circuit diagram of a transformer secondary circuit of a DC-DC power supply apparatus in a T74 period according to Embodiment 2 of the present invention.

In FIG. 9, T91 is equivalent to T61 in FIG. 6; Q97, Q98, Q99, and Q910 are equivalent to Q67, Q68, Q69, and Q610 in FIG. 6; L91 and L92 are equivalent to L61 and L62 in FIG. 6; and C91 and C92 are equivalent to C61 and C62 in FIG. 6.

In the T75 period, Q910 is turned off, and two current loops exist in the circuit: the fifth current loop, and the sixth current loop.

The fifth current loop flows through the winding in the negative half cycle of the secondary circuit of the transformer T91 as well as Q97, Q98, L92, and C92, and, if any load is connected to the power supply, further flows through the load connected to the power supply. In this case, a certain amount of energy is stored by L92 and C92; the voltage output port outputs a voltage to the load, and the flow direction of the current is: a positive level is output from the negative half cycle of the transformer secondary circuit, and then flows through Q97, Q98, L92, and C92; the voltage on the voltage output port is higher than the voltage on the center tap of the secondary winding of the transformer T81, and the output voltage 2 is a high voltage.

The sixth current loop flows through Q99, L91, and C91, and, if any load is connected to the power supply, further flows through the load connected to the power supply. In this case, Q99 is turned on, and performs fly wheeling for the corresponding buck circuit. The output voltage 1 is a high voltage.

In the T76 period, two current loops exist: the seventh current loop, and the eighth current loop.

The seventh current loop flows through Q910, L92, and C92, and, if any load is connected to the power supply, further flows through the load connected to the power supply. In this case, the energy in the circuit loop comes from the energy stored by L92 and C92 in the T75 period, and the voltage output port outputs a voltage to the load; L92 and C92 begin to discharge electricity, and the current flows from L92 to C92 and then to Q910; and the output voltage 2 port outputs a high voltage.

The eighth current loop flows through Q99, L91, and C91, and, if any load is connected to the power supply, further flows through the load connected to the power supply. In this case, Q99 is turned on, and performs fly wheeling for the corresponding buck circuit. The output voltage 1 is a high voltage.

As can be seen, in the T71 period and the T74 period, the output voltage 1 and the output voltage 2 are always high voltages, namely, the two voltages that need to be output by the power supply.

In the entire time sequence, the cycles similar to T71 and T74 recur to constitute a complete time sequence, and the rectangular square-wave power supply output by the transformer T61 is rectified by the buck converter circuit capable of the composite functions into two DC power supplies.

If more independent output voltages are required, more windings of the transformer may be added. For each added winding, a pair of independent output voltages may be added. The mode of obtaining the output voltages by adding windings is similar to the mode of implementing the second embodiment of the DC-DC power supply apparatus herein.

Based on the embodiments of the present invention, improvement may be made for other DC-DC power supplies that use a primary traditional topology structure, namely, the DC-DC power supplies whose circuit structure can be split by the isolation component into a primary circuit and a secondary circuit, for example, the DC-DC power supplies that employ a single-ended forward circuit, a push-pull circuit, or a half-bridge circuit.

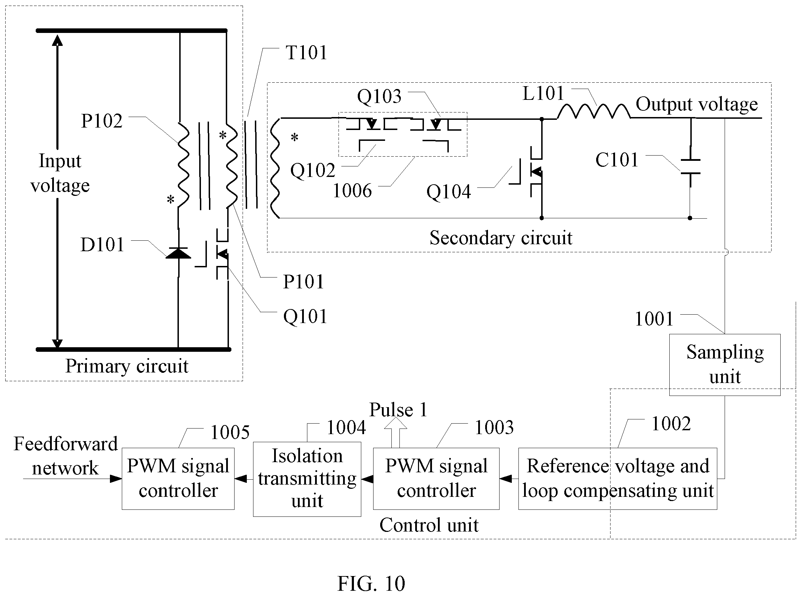

The Embodiment 3 of the DC-DC power supply apparatus is intended for a single-ended forward circuit. Its circuit structure is shown in FIG. 10:
The circuit includes: a primary circuit, a secondary circuit, and a control unit. The isolation primary transformer T101 connected to the primary circuit and the secondary circuit has a reset coil.

The MOS transistor Q101, the diode D101, the primary winding P101 of the transformer T101, and the primary winding P102 of the transformer T101 constitute a forward transformation primary circuit.

Pulse signals of a constant duty ratio may be used to control the on/off state of the MOS transistor Q101 of the primary circuit of the DC-DC power supply apparatus according to the actual application conditions, or a primary circuit may be used to control the on/off state for the purpose of fine tuning.

When controlling the on/off state through a primary circuit for the purpose of fine tuning, the DC-DC power supply apparatus may use a feedforward network to control the PWM signal controller 1005 in the control unit to generate a PWM pulse, and the PWM pulse drives the gate electrode of Q101 to control its on/off state for the purpose of fine tuning.

When using pulse signals of a constant duty ratio to control the on/off state, this DC-DC power supply apparatus provides a pulse of a constant duty ratio to drive the gate electrode of Q101 and control its on/off state. Taking FIG. 10 as an example, a PWM signal controller 1003 in the control unit may output a PWM signal, and an isolation, transmitting unit 1004 transmits the PWM signal to the primary circuit to generate a PWM pulse of a constant duty ratio, and the PWM pulse drives the gate electrode of Q101 to control the on/off state. Alternatively, a PWM signal controller 1005 directly generates a PWM pulse of a constant duty ratio to drive the gate electrode of Q101 and control its on/off state. Alternatively, the PWM pulse is generated by another apparatus capable of generating pulse signals. If a PWM signal controller 1003 is used to output PWM pulses, the PWM signal controller 1005 in this circuit diagram is not required; if the pulses are output by a PWM signal controller 1005 or another apparatus, the isolation transmitting unit 1004 in this circuit diagram is not required, and the duty ratio of the pulse that drives the gate electrode of Q101 may be 50% or another value.

The circuit coupled to the secondary winding of the isolation primary transformer T101 is referred as a transformer secondary circuit. The transformer secondary circuit is a buck rectifier circuit capable of composite functions. The bidirectional controllable switch unit 1006 includes MOS transistors Q102 and Q103. Q102 and Q103 are half-wave synchronous rectifier transistors of the transformer secondary circuit. Q104 is a composite buck half-wave rectifier secondary flywheel transistor; L101 is an output energy storage and filter inductor; and C101 is an output energy storage and filter capacitor. The source electrode of Q102 is connected to the positive half cycle output port of the secondary winding of T101, and receives the output from the positive half cycle of the transformer secondary circuit. The drain electrode of Q102 is connected to the drain electrode of the MOS transistor Q103, and the source electrode of Q103 is connected to the drain electrode of Q104 and to L101, while the source electrode of Q104 is connected to C101 and the low-voltage output port of the secondary winding of the transformer T101, and the other port of L101 and the other port of C101 are connected together as a voltage output port to output the voltage of this power supply. Q102, Q103, Q104, T101, L101, and C101 constitute the composite half-wave rectifier and buck converter circuit of the secondary circuit.

If positive half cycle of the secondary winding of the transformer T101 outputs a high voltage, Q104 is turned off, and the current flows through Q102, Q103, L101, and C101, and, if any load is connected to the power supply, further flows through the load connected to the power supply. In this case, a certain amount of energy is stored by L101 and C101, and the voltage output port outputs the voltage to the load.

If the positive half cycle of the secondary winding of the transformer T101 outputs a low level, Q104 is turned on. In this case, L101 and C101 begin to discharge electricity, and the current flows through Q104, L101, and C101, and, if any load is connected to the power supply, further flows through the load connected to the power supply. The voltage output port outputs a voltage to the load.

The sampling unit 1001 in the control unit monitors the change of the output voltage. Once the output voltage changes, the change signal collected by the sampling unit 1001 is sent to the reference voltage and loop compensating unit 1002. After being processed, the signal is transmitted to the PWM signal controller 1003. The PWM signal controller 1003 adjusts the output PWM pulse 1 according to the processed change signal. The adjusted pulse 1 drives the gate electrodes of Q102, Q103, and Q104, and adjusts the buck converter circuit capable of composite functions to adjust the output DC voltage and obtain the required DC voltage.

In this embodiment, L101 is also referred as the first energy storage and filter inductor; C101 is also referred as the first energy storage and filter capacitor; the bidirectional controllable switch unit 1006 is also referred as the first bidirectional controllable switch unit; and Q104 is also referred as the third switch unit.

In this embodiment, no isolation component like a transformer or an isolation optocoupler needs to participate in the feedback loop to adjust the output voltage; instead, a buck rectifier circuit capable of composite functions serves as a secondary circuit to participate in the feedback loop and adjust the output voltage. Because the transformer does not need to participate in the adjustment process, no noise is generated by the change of the working state of the transformer in each cycle. In addition, because no isolation component like the isolation optocoupler needs to participate in the feedback loop, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, the MOS transistors Q102 and Q103 may be any fully controllable switch units, for example, bidirectional controllable MOSFETs, IGBTs, and GTOs. The MOS transistors are generally MOSFETs in the high-frequency DC/DC transformation switch power supply. The MOS transistors Q102 and Q103 in FIG. 10 are a bidirectional controllable MOSFET switch combination.

Q104 in FIG. 10 may be replaced with a diode in the case that the output voltage is high or the current is weak.

If more independent output voltages are required, more secondary windings may be added to extend the circuits of the transformer secondary circuit. The number of secondary windings that need to be added to the transformer secondary circuit is equal to the number of output voltages required. Each secondary winding is connected to the buck rectifier circuit capable of composite functions according to Embodiment 3 of the DC-DC power supply apparatus herein.

The Embodiment 3 of the DC-DC power supply apparatus supposes that the primary circuit of the transformer is a forward circuit with a reset coil. For the DC-DC power supply apparatuses based on other types of forward circuits, for example, the DC-DC power supply apparatuses based on a two-transistor forward circuit, an active clamp forward circuit, or a resonant reset forward circuit, the implementation mode is similar to the Embodiment 3 of the DC-DC power supply apparatus herein.

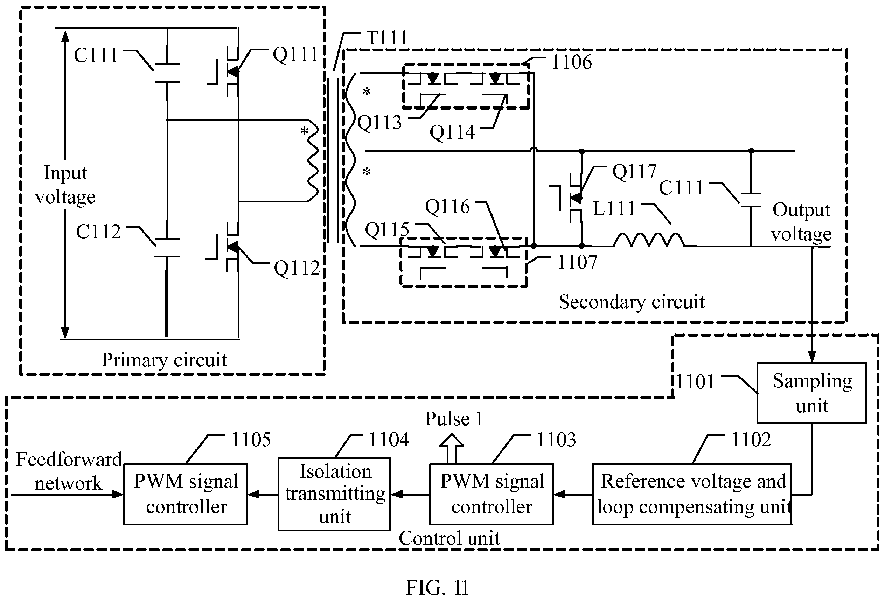

The Embodiment 4 of the DC-DC power supply apparatus is intended for a primary circuit which adopts a half-bridge topology. Its circuit structure is shown in FIG. 11.

The circuit includes: a primary circuit, a secondary circuit, and a control unit. The secondary winding of the isolation primary transformer T111 connected to the primary circuit and the secondary circuit has a center tap.

The circuit coupled to the primary winding of the isolation primary transformer T111 is referred as a transformer primary circuit. The MOS transistors Q111 and Q112 combine with the capacitors C111 and C112 into a half-bridge converter circuit of the transformer primary circuit. The structure of this primary circuit is referred as a half-bridge topology structure.

Pulse signals of a constant duty ratio may be used to control the on/off state of the MOS transistors Q111 and Q112 of the primary circuit of the DC-DC power supply apparatus according to the actual application conditions, or a primary circuit may be used to control the on/off state for the purpose of fine tuning.

By controlling the on/off state through a primary circuit for the purpose of fine tuning, the DC-DC power supply apparatus may use a feedforward network to control the PWM signal controller 105 in the control unit to generate a PWM pulse, and the PWM pulse drives the gate electrodes of Q111 and Q112 to control the on/off state for the purpose of fine tuning.

By using pulse signals of a constant duty ratio to control the on/off state, this DC-DC power supply apparatus provides a pulse of a constant duty ratio to drive the gate electrodes of Q11 and Q112 and control the on/off state. Taking FIG. 11 as an example, a PWM signal controller 1103 in the control unit may output a PWM signal, and an isolation transmitting unit 1104 transmits the PWM signal to the primary circuit to generate a PWM pulse of a constant duty ratio, and the PWM pulse drives the gate electrodes of Q111 and Q112 to control the on/off state. Alternatively, a PWM signal controller 1105 directly generates a PWM pulse of a constant duty ratio to drive the gate electrodes of Q111 and Q112 and control the on/off state. Alternatively, the PWM pulse is generated by another apparatus capable of generating pulse signals. If a PWM signal controller 1103 is used to output PWM pulses, the PWM signal controller 1105 in this circuit diagram is not required; if the pulses are output by a PWM signal controller 1105 or another apparatus, the isolation transmitting unit 1104 in this circuit diagram is not required, and the duty ratio of the pulse that drives the gate electrodes of Q111 and Q112 may be 50% or another value.

The circuit coupled to the secondary winding of the isolation primary transformer T111 is referred as a transformer secondary circuit. The transformer secondary circuit is a buck rectifier circuit capable of composite functions. The structure of the secondary circuit in FIG. 11 is similar to the structure of the secondary circuit in FIG. 2.

L111 on the transformer secondary circuit is an energy storage and filter inductor of the buck converter circuit capable of composite functions. C113 is an output energy storage and filter capacitor. The bidirectional controllable switch unit 1106 includes MOS transistors Q113 and Q114. The source electrode of Q113 is connected to the positive half cycle output port of the secondary winding of the transformer T111, and receives the output from the positive half cycle of the transformer secondary circuit. The drain electrode of Q113 is connected to the drain electrode of the MOS transistor Q114, and the source electrode of Q114 is connected to the source electrode of Q116 and the drain electrode of Q117. The bidirectional controllable switch unit 1107 includes MOS transistors Q115 and Q116. The source electrode of Q115 is connected to the negative half cycle output port of the secondary winding of the transformer T111, and receives the output from the negative half cycle of the transformer secondary circuit. The drain electrode of Q115 is connected to the drain electrode of the MOS transistor Q116, and the source electrode of Q116 is connected to the source electrode of Q114 and the drain electrode of Q117. The source electrode of Q117 is connected to C113 and the center tap of the secondary winding of the transformer T111. The other port of L111 and the other port of C113 are connected together as a voltage output port to output a voltage which is a power supply output voltage. Q113, Q114, Q117, L111, and C113 constitute a positive half cycle buck converter circuit among the buck converter circuits capable of composite functions in the transformer secondary circuit. Q115, Q116, Q117, L111, and C113 constitute the negative half cycle buck converter circuit among the buck converter circuits capable of composite functions in the transformer secondary circuit.

The sampling unit 1101 in the control unit monitors the change of the output voltage. Once the output voltage changes, the change signal collected by the sampling unit 1101 is sent to the reference voltage and loop compensating unit 1102. After being processed, the signal is transmitted to the PWM signal controller 1103. The PWM signal controller 1103 adjusts the output PWM pulse 1 according to the processed change signal. The adjusted pulse 1 drives the gate electrodes of Q113, Q114, Q115, Q116, and Q117, and adjusts the buck converter circuit capable of composite functions to adjust the output DC voltage and obtain the required DC voltage.

In this embodiment, no isolation component like a transformer or an isolation optocoupler needs to participate in the feedback loop to adjust the output voltage; instead, a buck rectifier circuit capable of composite functions serves as a secondary circuit to participate in the feedback loop and adjust the output voltage. Because the transformer does not need to participate in the adjustment process, no noise is generated by the change of the working state of the transformer in each cycle. In addition, because no isolation component like the isolation optocoupler needs to participate in the feedback loop, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, the MOS transistors Q113 and Q114 as well as the MOS transistors Q115 and Q116 may be any fully controllable switch units, for example, bidirectional controllable MOSFETs, IGBTs, and GTOs. The MOS transistors are generally MOSFETs in the high-frequency DC/DC transformation switch power supply. The MOS transistors Q113 and Q114 as well as the MOS transistors Q115 and Q116 in FIG. 11 are a bidirectional controllable MOSFET switch combination.

Q117 in FIG. 11 may be replaced with a diode in the case that the output voltage is high or the current is weak.

The working sequence and the working mode of the secondary circuit in the Embodiment 4 of the DC-DC power supply apparatus are substantially similar to those in the Embodiment 1 of the DC-DC power supply apparatus herein.

If more independent output voltages are required, one more secondary circuit in the embodiment of the DC-DC power supply apparatus may be added to extend the secondary circuit in the Embodiment 4 of the DC-DC power supply apparatus to add one output voltage; or more secondary windings are added to generate other output voltages.

In the Embodiment 4 of the DC-DC power supply apparatus, the primary circuit is based on a half-bridge topology structure. If the primary circuit is based on other half-bridge topology structures like the resonant half-bridge topology or the push-pull topology, the implementation mode is similar to the Embodiment 4 of the DC-DC power supply apparatus.

In the half-bridge topology structure and the full-bridge topology structure provided in the Embodiment 1 and the Embodiment 2 of the DC-DC power supply apparatus herein, the secondary winding has a center tap, and full-wave rectification is implemented on the secondary circuit. In the Embodiments 1, 2, and 4 of the DC-DC power supply apparatus, the two half-cycle output voltages of the secondary winding, the positive half cycle output voltage, and the negative half cycle output voltage undergo secondary composite buck control of the buck converter circuit capable of composite functions to output the required voltage. In the Embodiment 5 of the DC-DC power supply apparatus herein, composite buck control is exercised on only one of the two half-cycle output voltages of the secondary winding to output the required voltage.

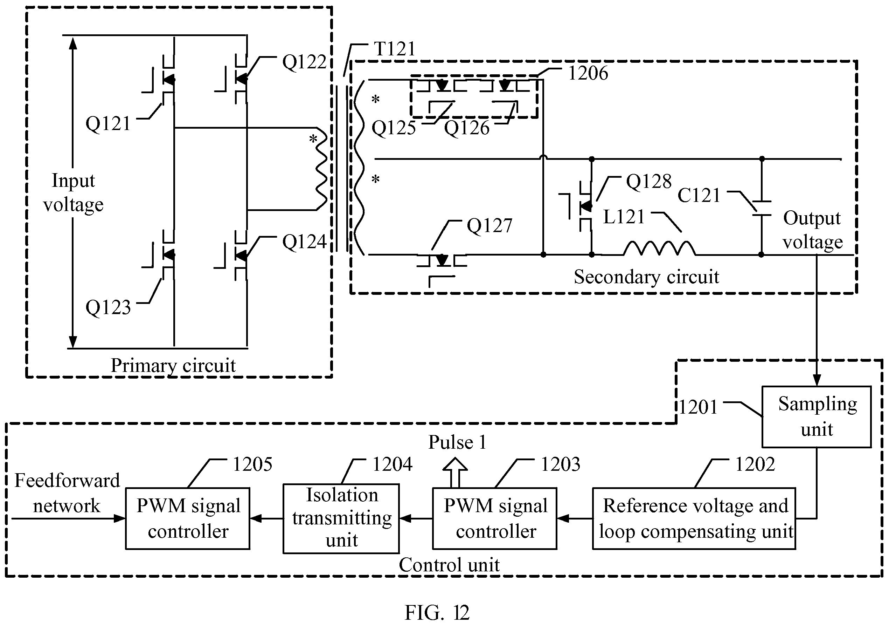

FIG. 12 shows a circuit structure of a DC-DC power supply apparatus in the Embodiment 5 of the present invention.

The circuit includes: a primary circuit, a secondary circuit, and a control unit. The secondary winding of the isolation primary transformer T121 connected to the primary circuit and the secondary circuit has a center tap.

The circuit coupled to the primary winding of the isolation primary transformer T121 is referred as a transformer primary circuit. The MOS transistors Q121, Q122, Q123, and Q124 located on the primary circuit constitute two bridge arms of the transformer primary circuit. The structure of this primary circuit is referred as a full-bridge topology structure.

Pulse signals of a constant duty ratio may be used to control the on/off state of the MOS transistors Q121, Q122, Q123, and Q124 of the primary circuit of the DC-DC power supply apparatus, or a primary circuit may be used to control the on/off state for the purpose of fine tuning.

When controlling the on/off state through a primary circuit for the purpose of fine tuning, the DC-DC power supply apparatus may use a feedforward network to control the PWM signal controller 1205 in the control unit to generate a PWM pulse, and the PWM pulse drives the gate electrodes of Q121, Q122, Q123, and Q124 to control the on/off state for the purpose of fine tuning.

When using pulse signals of a constant duty ratio to control the on/off state, this DC-DC power supply apparatus provides a pulse of a constant duty ratio to drive the gate electrodes of Q121, Q122, Q123, and Q124 and control the on/off state. Taking FIG. 12 as an example, a PWM signal controller 1203 in the control unit may output a PWM signal, and an isolation transmitting unit 1204 transmits the PWM signal to the primary circuit to generate a PWM pulse of a constant duty ratio, and the PWM pulse drives the gate electrodes of Q121, Q122, Q123, and Q124 to control the on/off state. Alternatively, a PWM signal controller 1205 directly generates a PWM pulse of a constant duty ratio to drive the gate electrodes of Q121, Q122, Q123, and Q124 and control the on/off state. Alternatively, the PWM pulse is generated by another apparatus capable of generating pulse signals. If a PWM signal controller 1203 is used to output PWM pulses, the PWM signal controller 1205 in this circuit diagram is not required; if the pulses are generated by a PWM signal controller 1205 or another apparatus, the isolation transmitting unit 1204 in this circuit diagram is not required, and the duty ratio of the pulse that drives the gate electrodes of Q121, Q122, Q123, and Q124 may be 50% or another value.

The circuit coupled to the secondary winding of the isolation primary transformer T121 is referred as a transformer secondary circuit. The positive half cycle circuit connected to the transformer secondary circuit is a buck rectifier circuit capable of composite functions. L121 on the transformer secondary circuit is an energy storage and filter inductor of the buck converter circuit capable of composite functions. C121 is an output energy storage and filter capacitor. The bidirectional controllable switch unit 1206 includes MOS transistors Q125 and Q126. The source electrode of Q125 is connected to the positive half cycle output port of the secondary winding of the transformer T121, and receives the output from the positive half cycle of the transformer secondary circuit. The drain electrode of Q125 is connected to the drain electrode of the MOS transistor Q126, and the source electrode of Q126 is connected to the drain electrode of Q127 and the drain electrode of Q128. The source electrode of the MOS transistor Q127 is connected to the negative half cycle output port of the secondary winding of the transformer T121, and receives the output from the negative half cycle of the transformer secondary circuit, and the drain electrode is connected to the source electrode of Q126 and the drain electrode of Q128. The source electrode of Q128 is connected to C121 and the center tap of the secondary winding of the transformer T121. The other port of L121 and the other port of C121 are connected together as a voltage output port to output a voltage which is a power supply output voltage. Q125, Q126, Q128, L121, and C121 constitute the positive half cycle buck converter circuit among the buck converter circuits capable of composite functions in the transformer secondary circuit. Q127, Q128, L121, and C121 constitute the half-wave rectifier circuit of the transformer secondary circuit. Like the MOS transistors Q121, Q122, Q123, and Q124 located on the primary circuit, Q127 accepts the constant duty ratio control, or is adjusted finely through a primary circuit. The sampling unit 1201 in the control unit monitors the change of the output voltage. Once the output voltage changes, the change signal collected by the sampling unit 1201 is sent to the reference voltage and loop compensating unit 1202. After being processed, the signal is transmitted to the PWM signal controller 1203. The PWM signal controller 1203 adjusts the output PWM pulse 1 according to the processed change signal. The adjusted pulse 1 drives the gate electrodes of Q125, Q126, and Q128, and adjusts the buck converter circuit capable of composite functions to adjust the output DC voltage and output the required DC voltage.

In FIG. 12, the secondary circuit is connected to the negative half cycle output of the transformer, and the half-wave rectifier circuit composed of Q127, Q128, L121, and C121 has one less MOS transistor compared with the circuit in FIG. 2, but it is still competent for transformation and feedback processing on the secondary circuit directly because the entire secondary circuit is enough.

In this embodiment, L121 is also referred as the first energy storage and filter inductor; C121 is also referred as the first energy storage and filter capacitor; the bidirectional controllable switch unit 1206 is also referred as the first bidirectional controllable switch unit; Q128 is also referred as the third switch unit; and Q127 is also referred as the fifth switch unit.

In this embodiment, no isolation component like a transformer or an isolation optocoupler needs to participate in the feedback loop to adjust the output voltage; instead, a buck rectifier circuit capable of composite functions serves as a secondary circuit to participate in the feedback loop and adjust the output voltage. Because the transformer does not need to participate in the adjustment process, no noise is generated by the change of the working state of the transformer in each cycle. In addition, because no isolation component like the isolation optocoupler needs to participate in the feedback loop, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, the MOS transistors Q125 and Q126 may be any fully controllable switch units, for example, bidirectional controllable MOSFETs, IGBTs, and GTOs. The MOS transistors are generally MOSFETs in the high-frequency DC/DC transformation switch power supply. The MOS transistors Q125 and Q126 in FIG. 12 are a bidirectional controllable MOSFET switch combination.

Q127 and Q128 in FIG. 12 may be replaced with diodes in the case that the output voltage is high or the current is low.

In this embodiment, if more independent output voltages are required, one more output voltage may be added to extend the secondary circuit; or more secondary windings are added to generate other output voltages.

In the Embodiment 5 of the DC-DC power supply apparatus, it is assumed that the primary circuit adopts a full-bridge topology, and that the buck rectifier circuit capable of composite functions is connected to the positive half cycle output of the transformer secondary circuit. In the case that the primary circuit adopts another topology or the buck rectifier circuit capable of composite functions is connected to the negative half cycle output of the transformer secondary circuit, the implementation mode is substantially similar to that in the Embodiment 5 of the DC-DC power supply apparatus herein.

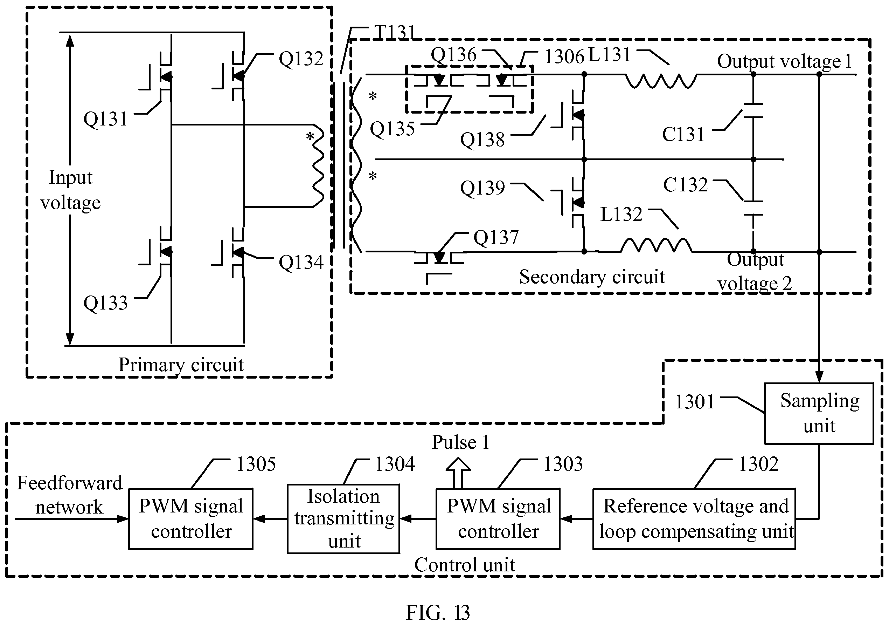

In the case of adding one output voltage to extend the secondary circuit, it is proper to perform composite buck control on one of the two half-cycle output voltages of the secondary winding, and the other voltage is output directly. The Embodiment 6 of the DC-DC power supply apparatus herein illustrates such a structure, as shown in FIG. 13:
The circuit includes: a primary circuit, a secondary circuit, and a control unit. The secondary winding of the isolation primary transformer T131 connected to the primary circuit and the secondary circuit has a center tap.

The circuit coupled to the primary winding of the isolation primary transformer T131 is referred as a transformer primary circuit. The MOS transistors Q131, Q132, Q133, and Q134 constitute two bridge arms of the transformer primary circuit. The structure of this primary circuit is referred as a full-bridge topology structure.

Pulse signals of a constant duty ratio may be used to control the on/off state of the MOS transistors Q131, Q132, Q133, and Q134 of the primary circuit of the DC-DC power supply apparatus according to the actual application conditions, or a primary circuit may be used to control the on/off state for the purpose of fine tuning.

When controlling the on/off state through a primary circuit for the purpose of fine tuning, the DC-DC power supply apparatus may use a feedforward network to control the PWM signal controller 1305 in the control unit to generate a PWM pulse, and the PWM pulse drives the gate electrodes of Q131, Q132, Q133, and Q134 to control the on/off state for the purpose of fine tuning.

When using pulse signals of a constant duty ratio to control the on/off state, this DC-DC power supply apparatus provides a pulse of a constant duty ratio to drive the gate electrodes of Q131, Q132, Q133, and Q134 and control the on/off state. Taking FIG. 13 as an example, a PWM signal controller 1303 in the control unit may output a PWM signal, and an isolation transmitting unit 1304 transmits the PWM signal to the primary circuit to generate a PWM pulse of a constant duty ratio, and the PWM pulse drives the gate electrodes of Q131, Q132, Q133, and Q134 to control the on/off state. Alternatively, a PWM signal controller 1305 directly generates a PWM pulse of a constant duty ratio to drive the gate electrodes of Q131, Q132, Q133, and Q134 and control the on/off state. Alternatively, the PWM pulse is generated by another apparatus capable of generating pulse signals. If a PWM signal controller 1305 is used to output PWM pulses, the PWM signal controller 1305 in this circuit diagram is not required; if the pulses are output by a PWM signal controller 1305 or another apparatus, the isolation transmitting unit 1304 in this circuit diagram is not required, and the duty ratio of the pulse that drives the gate electrodes of Q131, Q132, Q133 and Q134 may be 50% or another value.

The transformer secondary circuit is a composite rectifier circuit capable of buck conversion. Each side of this circuit outputs an output voltage independently, and the entire circuit has two independent output voltages: output voltage 1 and output voltage 2.

The circuit coupled to the secondary winding of the isolation primary transformer T131 is referred as a transformer secondary circuit. L131 and L132 of the transformer secondary circuit are energy storage and filter inductors of the buck converter circuit capable of composite functions. C131 and C132 are output energy storage and filter capacitors. The bidirectional controllable switch unit 1306 includes MOS transistors Q135 and Q136. The source electrode of Q135 is connected to the positive half cycle output port of the secondary winding of the transformer T131, and receives the output from the positive half cycle of the transformer secondary circuit. The drain electrode of Q135 is connected to the drain electrode of the MOS transistor Q136, and the source electrode of Q136 is connected to the drain electrode of Q138 and to L131. The source electrode of the Q138 is connected to C131, the source electrode of Q139, and the center tap of the secondary winding of the transformer T131. The other port of L131 and the other port of C131 are connected together as a voltage output port to output the output voltage 1. Q135, Q136, Q138, L131, and C131 constitute a buck converter circuit capable of composite functions of the transformer secondary circuit. The source electrode of the MOS transistor Q137 is connected to the negative half cycle output port of the secondary winding of the transformer T131, and receives the output from the negative half cycle of the transformer secondary circuit, and the drain electrode is connected to the drain electrode of the Q139 and to L132. The source electrode of Q139 is connected to C132, the source electrode of Q138, and the center tap of the secondary winding of the transformer T131. The other port of L132 and the other port of C132 are connected together as a voltage output port to output the output voltage 2. Q137, Q138, L132, and C132 constitute the half-wave rectifier circuit of the transformer secondary circuit.

Like the MOS transistors Q131, Q132, Q133, and Q134 located on the primary circuit, Q137 accepts the constant duty ratio control, or is adjusted finely through a primary circuit. The sampling unit 1301 in the control unit detects the change of the output voltage. Once the output voltage changes, the change signal collected by the sampling unit 1301 is sent to the reference voltage and loop compensating unit 1302. After being processed, the signal is transmitted to the PWM signal controller 1303. The PWM signal controller 1303 adjusts the output PWM pulse 1 according to the processed change signal. The adjusted pulse 1 drives the gate electrodes of Q135, Q136, Q138, and Q139, and adjusts the buck converter circuit capable of composite functions to adjust the output DC voltage and obtain the required DC voltage.

In FIG. 13, the secondary circuit is connected to the negative half cycle output of the transformer, and the half-wave rectifier circuit composed of Q137, Q138, L132, and C132 has one less MOS transistor compared with the circuit in FIG. 6, but it is still competent for transformation and feedback processing on the secondary circuit directly because the entire secondary circuit is enough.

In this embodiment, L131 is also referred as the first energy storage and filter inductor; C131 is also referred as the first energy storage and filter capacitor; L132 is also referred as the third energy storage and filter inductor; C132 is also referred as the third energy storage and filter capacitor; the bidirectional controllable switch unit 1306 is also referred as the first bidirectional controllable switch unit; Q138 is also referred as the third switch unit; Q137 is also referred as the seventh switch unit; and Q139 is also referred as the eighth switch unit.

In this embodiment, no isolation component like a transformer or an isolation optocoupler needs to participate in the feedback loop to adjust the output voltage; instead, a buck rectifier circuit capable of composite functions serves as a secondary circuit to participate in the feedback loop and adjust the output voltage. Because the transformer does not need to participate in the adjustment process, no noise is generated by the change of the working state of the transformer in each cycle. In addition, because no isolation component like the isolation optocoupler needs to participate in the feedback loop, no delay is caused by the isolation component. Thus, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly.

In this embodiment, Q135 and Q136 may be any fully controllable switch units, for example, bidirectional controllable MOSFETs, IGBTs, and GTOs. The MOS transistors are generally MOSFETs in the high-frequency DC/DC transformation switch power supply. The MOS transistors Q135 and Q136 in FIG. 13 are a bidirectional controllable MOSFET switch combination.

Q137, Q138, and Q139 in FIG. 13 may be replaced with diodes in the case that the output voltage is high or the current is low.

In this embodiment, if more independent output voltages are required, more secondary windings may be added to generate other output voltages.

In the Embodiment 6 of the DC-DC power supply apparatus, it is assumed that the primary circuit adopts a full-bridge topology, and that the buck rectifier circuit capable of composite functions is connected to the positive half cycle output of the transformer secondary circuit. In the case that the primary circuit adopts another topology or the buck rectifier circuit capable of composite functions is connected to the negative half cycle output of the transformer secondary circuit, the implementation mode is substantially similar to that in the Embodiment 6 of the DC-DC power supply apparatus herein.

In practice, the input voltage of the DC-DC power supply apparatus has a wide range. In this case, the components in the DC-DC power supply apparatus need to have a high withstanding capability. Generally, the components with a higher withstanding capability have a lower efficiency. Therefore, the Embodiment 7 of the DC-DC power supply apparatus herein stabilizes a wide range of input voltages into a proper intermediate voltage beforehand through non-isolation conversion, and then outputs the required DC voltage according to the solutions in Embodiments 1 to 6 of the DC-DC power supply apparatus. In this way, the components of the DC-DC power supply apparatus in Embodiment 7 require only a lower withstanding capability. The components with a lower withstanding capability may be used to enhance the overall efficiency of the power supply and ensure the high dynamic feature of the power supply.

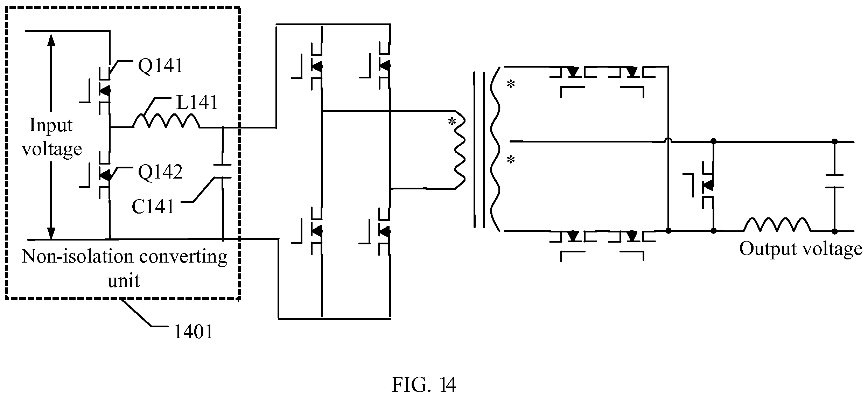

FIG. 14 shows a circuit structure of a DC-DC power supply apparatus in the seventh embodiment of the present invention.

In FIG. 14, the dotted box indicates a non-isolation converting unit 1401. The MOS transistors Q141 and Q142, the energy storage and filter inductor L141, and the energy storage and filter capacitor C141 constitute a buck converter circuit which works as a non-isolation converting unit. The source electrode of Q141 is connected to L141 and the drain electrode of Q142. The source electrode of Q142 is connected to C141. The other port of L141 and the other port of C141 are connected together, and the input voltage is loaded onto the drain electrode of Q141 and the source electrode of Q142, and input to the non-isolation converting unit 1401. The input on the drain electrode of Q141 is a high voltage. Both ports of C141 output an intermediate voltage to the secondary circuit. The C141 port connected to L141 outputs a high level of the intermediate voltage, and is connected to the port which inputs a high level on the secondary circuit; and the C141 port connected to Q142 outputs a low level of the intermediate voltage, and is connected to the port which inputs a low level on the secondary circuit.

After being adjusted by the non-isolation converting unit 1401, the input voltages in a wide range are adjusted to a proper intermediate voltage, which is output to the secondary circuit. The secondary circuit converts the intermediate voltage into a required DC voltage and outputs it.

The secondary circuit here may be any embodiment of the DC-DC power supply apparatus described above. FIG. 14 is a circuit diagram which takes Embodiment 1 of the DC-DC power supply apparatus as an example. The working mode of this secondary circuit is the same as that of the first embodiment of the DC-DC power supply apparatus herein.

The buck converter circuit in FIG. 14 is only one embodiment of the non-isolation converting unit. Any other circuit capable of stabilizing the voltages of a wide input voltage range (for example, a multi-phase buck converter circuit or a boost converter circuit) may serve as a non-isolation converting unit to implement this embodiment.

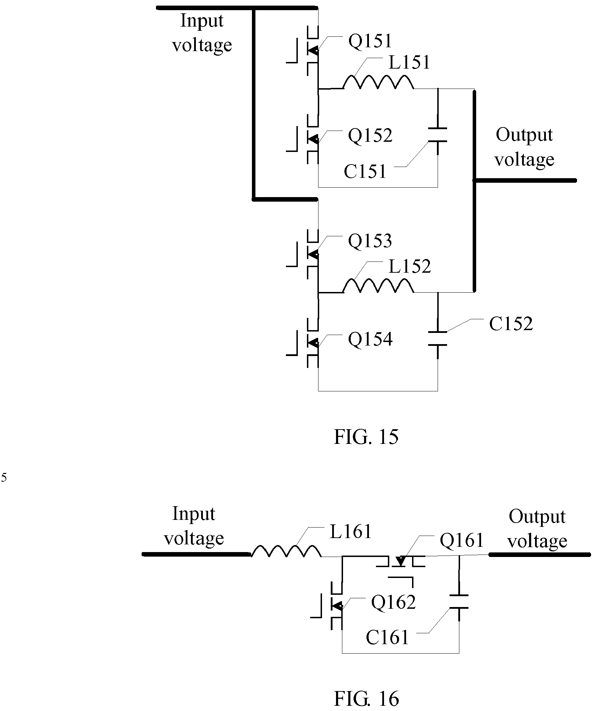

FIG. 15 is a two-phase buck converter circuit diagram.

The source electrode of the MOS transistor Q151 is connected to L151 and the drain electrode of Q152. The source electrode of Q152 is connected to C151. The other port of the energy storage and filter inductor L151 and the other port of the energy storage and filter capacitor C151 are connected together to constitute a one-phase buck converter circuit; Q153, Q154, L152, and C152 constitute another one-phase buck converter circuit. The high voltage of the input voltage is loaded onto the drain electrode of Q151 and the drain electrode of Q153. The drain electrode of Q151 and the drain electrode of Q153 are equivalent to the drain electrode of Q141 in FIG. 14. The low voltage of the input voltage is loaded onto the source electrode of Q152 and the source electrode of Q154. The source electrode of Q152 and the source electrode of Q154 are equivalent to the source electrode of Q142 in FIG. 14. The C151 port connected to L151 and the C152 port connected to L152 are equivalent to the C141 port connected to Q142 in FIG. 14, and output the high voltage of the output voltage. The C151 port connected to Q152 and the C152 port connected to Q154 are equivalent to the C141 port connected to Q142 in FIG. 14, and output the low voltage of the output voltage. When the two-phase buck converter circuit acts as a non-isolation converting unit, the output voltage is the intermediate voltage output by the non-isolation converting unit.

If a multiphase buck converter circuit is required, it is only necessary to add the required number of single-phase buck converter circuits. The implementation mode is similar to the implementation of the two-phase buck converter circuit described above.

FIG. 16 is a boost converter circuit diagram.

The energy storage and filter inductor L161 is connected to the drain electrode of the MOS transistor Q161 and the drain electrode of Q162. The source electrode of Q162 is connected to the energy storage and filter capacitor C161. The other port of C161 is connected to the source electrode of Q161 to constitute a boost converter circuit. The high voltage of the input voltage is loaded onto the other port of L161, and this port is equivalent to the drain electrode of Q141 in FIG. 14; the low voltage of the input voltage is loaded onto the source electrode of Q162, and this port is equivalent to the source electrode of Q142 in FIG. 14. The source electrode of Q161 is equivalent to the C141 port connected to Q142 in FIG. 14, and outputs the high voltage of the output voltage; and the source electrode of Q162 is equivalent to the C141 port connected to Q142 in FIG. 14, and outputs the low voltage of the output voltage. When this boost converter circuit acts as a non-isolation converting unit, its output voltage is an intermediate voltage output by the non-isolation converting unit.

A method for improving a DC-DC power supply apparatus according to an embodiment of the present invention includes: coupling a rectifier circuit capable of transformation to a secondary winding of a transformer of a DC-DC power supply apparatus, and converting a square-wave voltage output by the transformer into a DC output voltage; and monitoring the DC output voltage, and controlling a transformer secondary circuit to stabilize the DC output voltage to a required value according to the DC output voltage.

The square-wave voltage output by the transformer can be converted into a DC output voltage in the following two methods:
1. Convert the voltage output by the positive half cycle output port and the negative half cycle output port of the secondary winding into a DC output voltage if the secondary winding of the transformer includes a center tap, a positive half cycle output port, and a negative half cycle output port.
2. Convert the voltage output by the positive half cycle of the secondary winding into a first DC output voltage and convert the voltage output by the negative half cycle of the secondary winding into a second DC output voltage if the secondary winding of the transformer includes a center tap, a positive half cycle output port, and a negative half cycle output port.

The rectifier circuit capable of transformation is coupled to the secondary winding of the transformer of the DC-DC power supply apparatus in the following two methods:
1. Couple the rectifier circuit capable of direct transformation to either the positive half cycle output port or the negative half cycle output port of the secondary winding, and couple the traditional rectifier circuit to the other port of the secondary winding if the secondary winding of the transformer includes a center tap, a positive half cycle output port, and a negative half cycle output port.
2. Couple the rectifier circuit capable of direct transformation to both ports of the secondary winding if that the transformer includes a reset coil.

Further, the input voltage may be converted into an intermediate voltage, and is input into the primary circuit of the DC-DC power supply apparatus.

If multiple voltages need to be output, more windings may be added. A rectifier circuit capable of direct transformation may be coupled to each added winding.

No isolation component like a transformer or an isolation optocoupler needs to participate in the process of adjusting the DC output voltage; instead, the control unit directly controls a rectifier circuit capable of direct transformation to adjust the DC output voltage. Because the transformer does not need to participate in the process of adjustment, no noise is generated by the change of the working state of the transformer in the adjustment. In addition, because no isolation component like the isolation optocoupler needs to participate in the adjustment process, no delay is caused by the isolation component. Thus, the speed of response to the feedback signal is increased, the capability of dynamically adjusting the output voltage of the entire circuit is also improved, the bandwidth of the DC-DC power supply is no longer restricted by the isolation component and is wide enough, the response speed of the supply voltage is increased in the real-time adjustment of the output voltage, and the recovery speed of the supply voltage is increased when the load changes rapidly. Therefore, the dynamic performance of the DC-DC power supply is enhanced considerably.

In this embodiment, the rectifier circuit coupled to the secondary winding of the transformer and capable of transformation is generally a buck rectifier circuit, or may be a composite boost rectifier circuit on some occasions. The buck rectifier circuit is prevalent because it has few ripples and is highly controllable. The description herein takes the buck rectifier circuit as an example.

In the first embodiment of the method for improving a DC-DC power supply apparatus, it is assumed that the primary circuit adopts a full-bridge topology, and that the secondary winding of the transformer has a center tap, as described as follows:
In the case that the primary transformer of the DC-DC power supply apparatus employs a secondary winding with a center tap, a rectifier circuit capable of direct transformation may be connected to the secondary winding of the transformer to rectify the voltages output by the positive half cycle and the negative half cycle of the secondary winding of the transformer, and obtain one DC output voltage.

The DC output voltage is sampled; the change of the DC output voltage is monitored; the change signal is collected, and the DC output voltage is adjusted according to the change signal to output a required DC voltage.

If the primary circuit has any MOS transistor that needs to be controlled, pulse signals of a constant duty ratio may be used to control the on/off state of the MOS transistor, or a primary circuit may be used to control the on/off state for the purpose of fine tuning.

The circuit structure and the working mode for implementing the first embodiment of the method for improving a DC-DC power supply apparatus are similar to those for implementing the Embodiment 1 of the DC-DC power supply apparatus.

The second embodiment of the method for improving a DC-DC power supply apparatus is described as follows:
In the case that the primary transformer of the DC-DC power supply apparatus employs a secondary winding with a center tap, a rectifier circuit capable of direct transformation may be connected to the positive half cycle output port of the secondary winding of the transformer to rectify the voltage output by the positive half cycle of the secondary winding of the transformer and obtain the first DC output voltage; a rectifier circuit capable of direct transformation may be connected to the negative half cycle output port of the secondary winding of the transformer to rectify the voltage output by the negative half cycle of the secondary winding of the transformer and obtain the second DC output voltage.

The first DC output voltage and the second DC output voltage are sampled; the change of the DC output voltage is monitored; the change signal is collected, and the first DC output voltage and the second DC output voltage are adjusted according to the change signal to output a required DC voltage.

If the primary circuit has any MOS transistor that needs to be controlled, pulse signals of a constant duty ratio may be used to control the on/off state of the MOS transistor, or a primary circuit may be used to control the on/off state for the purpose of fine tuning.

The circuit structure and the working mode for implementing the second embodiment of the method for improving a DC-DC power supply apparatus are the same as those for implementing the Embodiment 2 of the DC-DC power supply apparatus.

The third embodiment of the method for improving a DC-DC power supply apparatus is described as follows:
In the case that the primary transformer of the DC-DC power supply apparatus employs a primary winding with a reset coil, a rectifier circuit capable of direct transformation may be connected to the secondary winding of the transformer to rectify the voltage output by the positive half cycle of the secondary winding of the transformer and obtain one DC output voltage.

The DC output voltage is sampled; the change of the DC output voltage is monitored; the change signal is collected, and the DC output voltage is adjusted according to the change signal to output a required DC voltage.

If the primary circuit has any MOS transistor that needs to be controlled, pulse signals of a constant duty ratio may be used to control the on/off state of the MOS transistor, or a primary circuit may be used to control the on/off state for the purpose of fine tuning.

The circuit structure and the working mode for implementing the third embodiment of the method for improving a DC-DC power supply apparatus are the same as those for implementing the Embodiment 3 of the DC-DC power supply apparatus.

The fourth embodiment of the method for improving a DC-DC power supply apparatus is described as follows:
In the case that the primary transformer of the DC-DC power supply apparatus employs a secondary winding with a center tap, a rectifier circuit capable of direct transformation may be connected to either the positive or the negative half cycle output port of the secondary winding of the transformer, and an ordinary rectifier circuit is connected to the other port to rectify the voltages output by the positive half cycle and the negative half cycle of the secondary winding of the transformer, and obtain one DC output voltage.

The DC output voltage is sampled; the change of the DC output voltage is monitored; the change signal is collected, and the DC output voltage is adjusted according to the change signal to output a required DC voltage.

If the primary circuit has any MOS transistor that needs to be controlled, pulse signals of a constant duty ratio may be used to control the on/off state of the MOS transistor, or a primary circuit may be used to control the on/off state for the purpose of fine tuning.

The circuit structure and the working mode for implementing the fourth embodiment of the method for improving a DC-DC power supply apparatus are similar to those for implementing the Embodiment 5 of the DC-DC power supply apparatus.

The fifth embodiment of the method for improving a DC-DC power supply apparatus is described as follows:
In the case that the primary transformer of the DC-DC power supply apparatus employs a secondary winding with a center tap, a rectifier circuit capable of direct transformation may be connected to either the positive or the negative half cycle output port of the secondary winding of the transformer, and an ordinary rectifier circuit is connected to the other port to rectify the voltage output by the positive half cycle of the secondary winding of the transformer and obtain the first DC output voltage, and rectify the voltage output by the negative half cycle of the secondary winding of the transformer and obtain the second DC output voltage.

The first DC output voltage and the second DC output voltage are sampled; the change of the DC output voltage is monitored; the change signal is collected, and the DC output voltages are adjusted according to the change signal to output a required DC voltage.

If the primary circuit has any MOS transistor that needs to be controlled, pulse signals of a constant duty ratio may be used to control the on/off state of the MOS transistor, or a primary circuit may be used to control the on/off state for the purpose of fine tuning.

The circuit structure and the working mode for implementing the fifth embodiment of the method for improving a DC-DC power supply apparatus are similar to those for implementing the Embodiment 6 of the DC-DC power supply apparatus.

The sixth embodiment of the method for improving a DC-DC power supply apparatus is described as follows:
In practice, the input voltage of the DC-DC power supply apparatus has a wide range. In this case, the components in the DC-DC power supply apparatus need to have a high withstanding capability. Generally, the components with a higher withstanding capability have a lower efficiency. Therefore, the sixth embodiment of the DC-DC power supply apparatus herein stabilizes a wide range of input voltages into a proper intermediate voltage beforehand through non-isolation conversion, and then inputs the intermediate voltage to the primary circuit of the DC-DC power supply apparatus. The DC-DC power supply apparatus converts the intermediate voltage and outputs the required DC voltage. In this way, the components of the DC-DC power supply apparatus in this embodiment require a lower withstanding capability. The components with a lower withstanding capability may be used to enhance the overall efficiency of the power supply and ensure the high dynamic feature of the power supply.

The circuit structure and the working mode for implementing the sixth embodiment of the method for improving a DC-DC power supply apparatus are similar to those for implementing the seventh embodiment of the DC-DC power supply apparatus.

Detailed above are a DC-DC power supply apparatus and a method for improving a DC-DC power supply apparatus under the present invention. Although the invention is described through several exemplary embodiments, the invention is not limited to such embodiments. It is apparent that those skilled in the art can make modifications and variations to the invention. The invention is intended to cover the modifications and variations provided that they fall within the scope of protection defined by the following claims or their equivalents.

## Claims

1. A Direct Current to Direct Current, DC-DC, power supply apparatus, comprising:
a transformer;
a transformer primary circuit;
a transformer secondary circuit, which comprises a rectifier circuit capable of transformation and configured to transform a square-wave voltage output by the transformer into a DC output voltage; and
a control unit, configured to monitor the change of the DC output voltage, to collect a change signal once the DC output voltage changes, and to control the transformer secondary circuit according to the change signal to stabilize the DC output voltage to a required value according to the DC output voltage;
wherein,
the control unit comprises a sampling unit (201), a reference voltage and loop compensating unit (202), a PWM signal controller (203) and an isolation transmitting unit (204),
the sampling unit (201) is adapted to monitor a change of the DC output voltage and to send a change signal collected by the sampling unit (201) to the reference voltage and loop compensating unit (202) if the DC output voltage changes,
the reference voltage and loop compensating unit (202), is adapted to process the change signal and to transmit the processed change signal to the PWM signal controller (203),
the PWM signal controller (203) is adapted to adjust PWM pulses according to the processed change signal, the adjusted PWM pulse adjusts the rectifier circuit capable of composite functions to adjust the output DC voltage and obtain the required DC voltage, and the PWM signal controller (203) is adapted to output a PWM signal to the isolation transmitting unit (204);
the isolation transmitting unit (204) is adapted to transmit the PWM signal to the primary circuit to generate a PWM pulse of a constant duty ratio;
the rectifier circuit capable of transformation is a buck rectifier circuit;
the buck rectifier circuit comprises: a first energy storage and filter inductor (L21), a first energy storage and filter capacitor (C21), a first bidirectional controllable switch unit (206), and a third switch unit (Q29); and
the first bidirectional controllable switch unit (206) is connected between a voltage output port of a secondary winding of the transformer and the third switch unit (Q29); one port of the first energy storage and filter inductor (L21) is connected to one port of the third switch unit (Q29) connected with the first bidirectional controllable switch unit (206); another port of the first energy storage and filter inductor (L21) is connected to one port of the first energy storage and filter capacitor (C21); another port of the first energy storage and filter capacitor (C21) is connected to another port of the third switch unit (Q29); and another port of the third switch unit (Q29) is connected to another port of the secondary winding of the transformer; the other port of the secondary winding of the transformer is a center tap of the secondary winding of the transformer;
wherein the bidirectional controllable switch unit (206) comprises:
a first switch unit and a second switch unit, wherein: a source electrode of the first switch unit is connected to the voltage output port of the secondary winding of the transformer, and a drain electrode of the first switch unit is connected to a drain electrode of the second switch unit.

2. The DC-DC power supply apparatus of claim 1, wherein:
the voltage output port of the secondary winding of the transformer is a positive half cycle output port of the secondary winding of the transformer;
and
the buck rectifier circuit further comprises:
a secondary bidirectional controllable switch unit (207) connected between a negative half cycle output port of the secondary winding of the transformer and a drain electrode of the third switch unit (Q29).

3. The DC-DC power supply apparatus of claim 1, wherein:
the voltage output port of the secondary winding of the transformer is a positive half cycle output port of the secondary winding of the transformer;
and
the buck rectifier circuit further comprises:
a second energy storage and filter inductor (L62), a second energy storage and filter capacitor (C62), a third bidirectional controllable switch unit (607), and a fourth switch unit (Q610), wherein: the third bidirectional controllable switch unit (607) is connected between a negative half cycle output port of the secondary winding of the transformer and the fourth switch unit (Q610); one port of the second energy storage and filter inductor (L62) is connected to one port of the fourth switch unit (Q610) connected with the third bidirectional controllable switch unit (607); another port of the second energy storage and filter inductor (L62) is connected to one port of the second energy storage and filter capacitor (C62); another port of the second energy storage and filter capacitor (C62) is connected to another port of the fourth switch unit; and another port of the fourth switch unit is connected to the center tap of the secondary winding of the transformer.

4. The DC-DC power supply apparatus of claim 1, wherein:
the voltage output port of the secondary winding of the transformer is a positive half cycle output port of the secondary winding of the transformer;
and
the buck rectifier circuit further comprises:
a fifth switch unit (Q127), wherein: one port of the fifth switch unit (Q127) is connected to a negative half cycle output port of the secondary winding of the transformer, and another port is connected to one port of the third switch unit (Q29) connected with the first bidirectional controllable switch unit (206).

5. The DC-DC power supply apparatus of claim 1, wherein:
the voltage output port of the secondary winding of the transformer is a negative half cycle output port of the secondary winding of the transformer;
and
the buck rectifier circuit further comprises:
a sixth switch unit, wherein: one port of the sixth switch unit is connected to a positive half cycle output port of the secondary winding of the transformer, and another port is connected to one port of the third switch unit (Q29) connected with the first bidirectional controllable switch unit.

6. The DC-DC power supply apparatus of claim 1, wherein:
the voltage output port of the secondary winding of the transformer is a positive half cycle output port of the secondary winding of the transformer;
and
the buck rectifier circuit further comprises:
a third energy storage and filter inductor (L132), a third energy storage and filter capacitor (C132), a seventh switch unit (Q137), and an eighth switch unit (Q139), wherein: the seventh switch unit (Q137) is connected between a negative half cycle output port of the secondary winding of the transformer and the eighth switch unit (Q139); one port of the third energy storage and filter inductor (L132) is connected to one port of the eighth switch unit (Q139) connected with the seventh switch unit (Q137); another port of the third energy storage and filter inductor (L132) is connected to one port of the third energy storage and filter capacitor (C132); another port of the third energy storage and filter capacitor (C132) is connected to another port of the eighth switch unit (Q139); and another port of the eighth switch unit (Q139) is connected to the center tap of the secondary winding of the transformer.

7. The DC-DC power supply apparatus of claim 1, wherein:
the voltage output port of the secondary winding of the transformer is a negative half cycle output port of the secondary winding of the transformer;
and
the buck rectifier circuit further comprises:
a fourth energy storage and filter inductor, a fourth energy storage and filter capacitor, a ninth switch unit, and a tenth switch unit, wherein: the ninth switch unit is connected between a positive half cycle output port of the secondary winding of the transformer and the tenth switch unit; one port of the fourth energy storage and filter inductor is connected to one port of the tenth switch unit connected with the ninth switch unit; another port of the fourth energy storage and filter inductor is connected to one port of the fourth energy storage and filter capacitor; another port of the fourth energy storage and filter capacitor is connected to another port of the tenth switch unit; and another port of the tenth switch unit is connected to the center tap of the secondary winding of the transformer.

8. The DC-DC power supply apparatus of claim 1,
wherein the third switch unit (Q29) is one of the following units: Metal Oxide Semiconductor Field Effect Transistor, MOSFET, bidirectional controllable MOSFET, and Insulated Gate Bipolar Transistor, IGBT.

9. The DC-DC power supply apparatus of claim 1, wherein:
the first switch unit and the second switch unit are any one of the following units: Metal Oxide Semiconductor Field Effect Transistor, MOSFET, bidirectional controllable MOSFET, Insulated Gate Bipolar Transistor, IGBT, and Gate Turn-Off Thyristor, GTO.

10. The DC-DC power supply apparatus of any one of claims 3-7, wherein:
the fourth switch unit or the fifth switch unit or the sixth switch unit or the seventh switch unit or the eighth switch unit or the ninth switch unit or the tenth switch unit is one of the following units: Metal Oxide Semiconductor Field Effect Transistor, MOSFET, bidirectional controllable MOSFET, Insulated Gate Bipolar Transistor, IGBT, Gate Turn-Off Thyristor, GTO, and diode.

11. The DC-DC power supply apparatus of any one of claims 1-7, further comprising:
a non-isolation converting unit, coupled to the primary circuit and configured to convert an input voltage into an intermediate voltage, and input the intermediate voltage to the primary circuit.

## Patentansprüche

1. Gleichstrom-Gleichstrom- bzw. DC-DC-Leistungsversorgungseinrichtung, die Folgendes umfasst:
einen Transformator;
einen Transformatorprimärschaltkreis;
einen Transformatorsekundärschaltkreis, der einen Gleichrichterschaltkreis umfasst, der zur Transformation fähig ist und dazu konfiguriert ist, eine Rechteckspannung, die durch den Transformator ausgegeben wird, in eine DC-Ausgabespannung zu transformieren; und
eine Steuereinheit, die dazu konfiguriert ist, die Änderung der DC-Ausgangsspannung zu überwachen, ein Änderungssignal zu sammeln, sobald sich die DC-Ausgangsspannung ändert, und den Transformatorsekundärschaltkreis gemäß dem Änderungssignal zu steuern, um die DC-Ausgangsspannung auf einen benötigten Wert gemäß der DC-Ausgangsspannung zu stabilisieren;
wobei
die Steuereinheit eine Abtasteinheit (201), eine Referenzspannung-und-Schleifenkompensation-Einheit (202), eine PWM-Signal-Steuerung (203) und eine Isolationssendeeinheit (204) umfasst,
die Abtasteinheit (201) dazu ausgelegt ist, eine Änderung der DC-Ausgangsspannung zu überwachen und ein Änderungssignal, das durch die Abtasteinheit (201) gesammelt wird, an die Referenzspannung-und-Schleifenkompensation-Einheit (202) zu senden, falls sich die DC-Ausgangsspannung ändert,
die Referenzspannung-und-Schleifenkompensation-Einheit (202) dazu ausgelegt ist, das Änderungssignal zu verarbeiten und das verarbeitete Signal an die PWM-Signal-Steuerung (203) zu senden,
die PWM-Signal-Steuerung (203) dazu ausgelegt ist, PWM-Pulse gemäß dem verarbeiteten Änderungssignal anzupassen, wobei der angepasste PWM-Puls den Gleichrichterschaltkreis, der zu Kompositfunktionen fähig ist, anpasst, um die DC-Ausgangsspannung anzupassen und die benötigte DC-Spannung zu erhalten, und die PWM-Signal-Steuerung (203) dazu ausgelegt ist, ein PWM-Signal an die Isolationssendeeinheit (204) auszugeben;
die Isolationssendeeinheit (204) dazu ausgelegt ist, das PWM-Signal an den Primärschaltkreis zu senden, um einen PWM-Puls mit konstantem Tastverhältnis zu erzeugen;
der Gleichrichterschaltkreis, der zur Transformation fähig ist, ein Abwärtsgleichrichterschaltkreis ist;
der Abwärtsgleichrichterschaltkreis Folgendes umfasst: eine erste Energiespeicher-und-Filter-Induktivität (L21), einen ersten Energiespeicher-und-Filter-Kondensator (C21), eine erste bidirektional steuerbare Schalteinheit (206) und eine dritte Schalteinheit (Q29); und
die erste bidirektional steuerbare Schalteinheit (206) zwischen einem Spannungsausgangsport einer Sekundärwicklung des Transformators und der dritten Schalteinheit (Q29) verbunden ist; ein Port der ersten Energie-Speicher-und-Filter-Induktivität (L21) mit einem Port der dritten Schalteinheit (Q29) verbunden ist, die mit der ersten bidirektional steuerbaren Schalteinheit (206) verbunden ist; ein anderer Port der ersten Energie-Speicher-und-Filter-Induktivität (L21) mit einem Port des ersten Energiespeicher-und-Filter-Kondensators (C21) verbunden ist; ein anderer Port des ersten Energiespeicher-und-Filter-Kondensators (C21) mit einem anderen Port der dritten Schalteinheit (Q29) verbunden ist; und ein anderer Port der dritten Schalteinheit (Q29) mit einem anderen Port der Sekundärwicklung des Transformators verbunden ist; der andere Port der Sekundärwicklung des Transformators ein Mittelabgriff der Sekundärwicklung des Transformators ist;
wobei die bidirektional steuerbare Schalteinheit (206) Folgendes umfasst:
eine erste Schalteinheit und eine zweite Schalteinheit, wobei: eine Source-Elektrode der ersten Schalteinheit mit dem Spannungsausgangsport der Sekundärwicklung des Transformators verbunden ist; und eine Drain-Elektrode der ersten Schalteinheit mit einer Drain-Elektrode der zweiten Schalteinheit verbunden ist.

2. DC-DC-Leistungsversorgungseinrichtung nach Anspruch 1, wobei:
der Spannungsausgangsport der Sekundärwicklung des Transformators ein Positivhalbzyklusausgangsport der Sekundärwicklung des Transformators ist; und
der Abwärtsgleichrichterschaltkreis ferner Folgendes umfasst:
eine sekundäre bidirektional steuerbare Schalteinheit (207), die zwischen einem Negativhalbzyklusausgangsport der Sekundärwicklung des Transformators und einer Drain-Elektrode der dritten Schalteinheit (Q29) verbunden ist.

3. DC-DC-Leistungsversorgungseinrichtung nach Anspruch 1, wobei:
der Spannungsausgangsport der Sekundärwicklung des Transformators ein Positivhalbzyklusausgangsport der Sekundärwicklung des Transformators ist; und
der Abwärtsgleichrichterschaltkreis ferner Folgendes umfasst:
eine zweite Energiespeicher-und-Filter-Induktivität (L62), einen zweiten Energiespeicher-und-Filter-Kondensator (C62), eine dritte bidirektional steuerbare Schalteinheit (607) und eine vierte Schalteinheit (Q610); wobei: die dritte bidirektional steuerbare Schalteinheit (607) zwischen einen Negativhalbzyklusausgangsport der Sekundärwicklung des Transformators und der vierten Schalteinheit (Q610) gekoppelt ist; ein Port der zweiten Energie-Speicher-und-Filter-Induktivität (L62) mit einem Port der vierten Schalteinheit (Q610) verbunden ist, die mit der dritten bidirektional steuerbaren Schalteinheit (607) verbunden ist; ein anderer Port der zweiten Energie-Speicher-und-Filter-Induktivität (L62) mit einem Port des zweiten Energiespeicher-und-Filter-Kondensators (C62) verbunden ist; ein anderer Port des zweiten Energiespeicher-und-Filter-Kondensators (C62) mit einem anderen Port der vierten Schalteinheit verbunden ist; und ein anderer Port der vierten Schalteinheit mit dem Mittelabgriff der Sekundärwicklung des Transformators verbunden ist.

4. DC-DC-Leistungsversorgungseinrichtung nach Anspruch 1, wobei:
der Spannungsausgangsport der Sekundärwicklung des Transformators ein Positivhalbzyklusausgangsport der Sekundärwicklung des Transformators ist; und
der Abwärtsgleichrichterschaltkreis ferner Folgendes umfasst:
eine fünfte Schalteinheit (Q127), wobei: ein Port der fünften Schalteinheit (Q127) mit einem Negativhalbzyklusausgangsport der Sekundärwicklung des Transformators verbunden ist und ein anderer Port mit einem Port der dritten Schalteinheit (Q29) verbunden ist, die mit der ersten bidirektional steuerbaren Schalteinheit (206) verbunden ist.

5. DC-DC-Leistungsversorgungseinrichtung nach Anspruch 1, wobei:
der Spannungsausgangsport der Sekundärwicklung des Transformators ein Negativhalbzyklusausgangsport der Sekundärwicklung des Transformators ist; und
der Abwärtsgleichrichterschaltkreis ferner Folgendes umfasst:
eine sechste Schalteinheit, wobei: ein Port der sechsten Schalteinheit mit einem Positivhalbzyklusausgangsport der Sekundärwicklung des Transformators verbunden ist und ein anderer Port mit einem Port der dritten Schalteinheit (Q29) verbunden ist, die mit der ersten bidirektional steuerbaren Schalteinheit verbunden ist.

6. DC-DC-Leistungsversorgungseinrichtung nach Anspruch 1, wobei:
der Spannungsausgangsport der Sekundärwicklung des Transformators ein Positivhalbzyklusausgangsport der Sekundärwicklung des Transformators ist; und
der Abwärtsgleichrichterschaltkreis ferner Folgendes umfasst:
eine dritte Energiespeicher-und-Filter-Induktivität (L132), einen dritten Energiespeicher-und-Filter-Kondensator (C132), eine siebte Schalteinheit (Q137) und eine achte Schalteinheit (Q139), wobei: die siebte Schalteinheit (Q137) zwischen einem Negativhalbzyklusausgangsport der Sekundärwicklung des Transformators und der achten Schalteinheit (Q139) verbunden ist; ein Port der dritten Energie-Speicher-und-Filter-Induktivität (L132) mit einem Port der achten Schalteinheit (Q139) verbunden ist, die mit der siebten Schalteinheit (Q137) verbunden ist; ein anderer Port der dritten Energie-Speicher-und-Filter-Induktivität (L132) mit einem Port des dritten Energiespeicher-und-Filter-Kondensators (C132) verbunden ist; ein anderer Port des dritten Energiespeicher-und-Filter-Kondensators (C132) mit einem anderen Port der achten Schalteinheit (Q139) verbunden ist; und ein anderer Port der achten Schalteinheit (Q139) mit dem Mittelabgriff der Sekundärwicklung des Transformators verbunden ist.

7. DC-DC-Leistungsversorgungseinrichtung nach Anspruch 1, wobei:
der Spannungsausgangsport der Sekundärwicklung des Transformators ein Negativhalbzyklusausgangsport der Sekundärwicklung des Transformators ist; und
der Abwärtsgleichrichterschaltkreis ferner Folgendes umfasst:
eine vierte Energiespeicher-und-Filter-Induktivität, einen vierten Energiespeicher-und-Filter-Kondensator, eine neunte Schalteinheit und eine zehnte Schalteinheit, wobei: die neunte Schalteinheit zwischen einem Positivhalbzyklusausgangsport der Sekundärwicklung des Transformators und der zehnten Schalteinheit verbunden ist; ein Port der vierten Energie-Speicher-und-Filter-Induktivität mit einem Port der zehnten Schalteinheit verbunden ist, die mit der neunten Schalteinheit verbunden ist; ein anderer Port der vierten Energie-Speicher-und-Filter-Induktivität mit einem Port des vierten Energiespeicher-und-Filter-Kondensators verbunden ist; ein anderer Port des vierten Energiespeicher-und-Filter-Kondensators mit einem anderen Port der zehnten Schalteinheit verbunden ist; und ein anderer Port der zehnten Schalteinheit mit dem Mittelabgriff der Sekundärwicklung des Transformators verbunden ist.

8. DC-DC-Leistungsversorgungseinrichtung nach Anspruch 1,
wobei die dritte Schalteinheit (Q29) eine der folgenden Einheiten ist: ein Metall-Oxid-Halbleiter-Feldeffekttransistor, MOSFET, ein bidirektional steuerbarer MOSFET und ein Bipolartransistor mit isoliertem Gate, IGBT.

9. DC-DC-Leistungsversorgungseinrichtung nach Anspruch 1, wobei:
die erste Schalteinheit und die zweite Schalteinheit eine beliebige der folgenden Einheiten sind: ein Metall-Oxid-Halbleiter-Feldeffekttransistor, MOSFET, ein bidirektional steuerbarer MOSFET, ein Bipolartransistor mit isoliertem Gate, IGBT, und ein Abschaltthyristor, GTO.

10. DC-DC-Leistungsversorgungseinrichtung nach einem der Ansprüche 3-7, wobei:
die vierte Schalteinheit oder die fünfte Schalteinheit oder die sechste Schalteinheit oder die siebte Schalteinheit oder die achte Schalteinheit oder die neunte Schalteinheit oder die zehnte Schalteinheit eine der folgenden Einheiten ist: ein Metall-Oxid-Halbleiter-Feldeffekttransistor, MOSFET, ein bidirektional steuerbarer MOSFET, ein Bipolartransistor mit isoliertem Gate, IGBT, und ein Abschaltthyristor, GTO, und eine Diode.

11. DC-DC-Leistungsversorgungseinrichtung nach einem der Ansprüche 1-7, die ferner Folgendes umfasst:
eine Nicht-Isolation-Umwandlungseinheit, die mit dem Primärschaltkreis gekoppelt ist und dazu konfiguriert ist, eine Eingangsspannung in eine Zwischenspannung umzuwandeln und die Zwischenspannung in den Primärschaltkreis einzugeben.

## Revendications

1. Appareil d'alimentation électrique courant continu-courant continu, C.C.-C.C., comprenant :
un transformateur ;
un circuit primaire de transformateur ;
un circuit secondaire de transformateur, lequel comprend un circuit redresseur capable d'une transformation et configuré pour transformer une sortie de tension d'onde carrée par le transformateur en une tension de sortie C.C. ; et
une unité de commande, configurée pour contrôler le changement de la tension de sortie C.C., collecter un signal de changement quand la tension de sortie C.C. change, et commander le circuit secondaire de transformateur en fonction du signal de changement pour stabiliser la tension de sortie C.C. à une valeur requise en fonction de la tension de sortie C.C. ;
dans lequel,
l'unité de commande comprend une unité d'échantillonnage (201), une unité de tension de référence et de compensation de boucle (202), un contrôleur de signal PWM (203) et une unité de transmission d'isolation (204),
l'unité d'échantillonnage (201) est adaptée pour contrôler un changement de la tension de sortie C.C. et envoyer un signal de changement collecté par l'unité d'échantillonnage (201) à l'unité de tension de référence et de compensation de boucle (202) si la tension de sortie C.C. change,
l'unité de tension de référence et de compensation de boucle (202), est adaptée pour traiter le signal de changement et transmettre le signal de changement traité au contrôleur de signal PWM (203),
le contrôleur de signal PWM (203) est adapté pour ajuster les impulsions PWM en fonction du signal de changement traité, l'impulsion PWM ajustée ajuste le circuit redresseur capable de fonctions composites pour ajuster la tension C.C. de sortie et obtenir la tension C.C. requise, et le contrôleur de signal PWM (203) est adapté pour produire en sortie un signal PWM vers l'unité de transmission d'isolation (204) ;
l'unité de transmission d'isolation (204) est adaptée pour transmettre le signal PWM au circuit primaire pour générer une impulsion PWM d'un facteur de marche constant ,
le circuit redresseur capable d'une transformation est un circuit redresseur dévolteur ; le circuit redresseur dévolteur comprend: une première bobine d'induction de stockage d'énergie et de filtrage (L21), un premier condensateur de stockage d'énergie et de filtrage (C21), une première unité de commutation bidirectionnelle contrôlable (206), et une troisième unité de commutation (Q29) ; et
la première unité de commutation bidirectionnelle contrôlable (206) est connectée entre un port de sortie de tension d'un enroulement secondaire du transformateur et la troisième unité de commutation (Q29) un port de la première bobine d'induction de stockage d'énergie et de filtrage (L21) est connecté à un port de la troisième unité de commutation (Q29) connecté à la première unité de commutation bidirectionnelle contrôlable (206) ; un autre port de la première bobine d'induction de stockage d'énergie et de filtrage (L21) est connecté à un port du premier condensateur de stockage d'énergie et de filtrage (C21) ; un autre port du premier condensateur de stockage d'énergie et de filtrage (C21) est connecté à un autre port de la troisième unité de commutation (Q29) ; et un autre port de la troisième unité de commutation (Q29) est connecté à un autre port de l'enroulement secondaire du transformateur ;
l'autre port de l'enroulement secondaire du transformateur est une prise centrale de l'enroulement secondaire du transformateur ;
dans lequel l'unité de commutation bidirectionnelle contrôlable (206) comprend :
une première unité de commutation et une deuxième unité de commutation, dans lequel : une électrode de source de la première unité de commutation est connectée au port de sortie de tension de l'enroulement secondaire du transformateur, et une électrode de drain de la première unité de commutation est connectée à une électrode de drain de la deuxième unité de commutation.

2. Appareil d'alimentation électrique C.C.-C.C. selon la revendication 1, dans lequel :
le port de sortie de tension de l'enroulement secondaire du transformateur est un port de sortie d'alternance positive de l'enroulement secondaire du transformateur ;
et
le circuit redresseur dévolteur comprend en outre :
une unité de commutation bidirectionnelle contrôlable secondaire (207) connectée entre un port de sortie d'alternance négative de l'enroulement secondaire du transformateur et une électrode de drain de la troisième unité de commutation (Q29).

3. Appareil d'alimentation électrique C.C.-C.C. selon la revendication 1, dans lequel :
le port de sortie de tension de l'enroulement secondaire du transformateur est un port de sortie d'alternance positive de l'enroulement secondaire du transformateur ;
et
le circuit redresseur dévolteur comprend en outre :
une deuxième bobine d'induction de stockage d'énergie et de filtrage (L62), un deuxième condensateur de stockage d'énergie et de filtrage (C62), une troisième unité de commutation bidirectionnelle contrôlable (607), et une quatrième unité de commutation (Q610), dans lequel : la troisième unité de commutation bidirectionnelle contrôlable (607) est connectée entre un port de sortie d'alternance négative de l'enroulement secondaire du transformateur et la quatrième unité de commutation (Q610) ; un port de la deuxième bobine d'induction de stockage d'énergie et de filtrage (L62) est connecté à un port de la quatrième unité de commutation (Q610) connectée à la troisième unité de commutation bidirectionnelle contrôlable (607) ; un autre port de la deuxième bobine d'induction de stockage d'énergie et de filtrage (L62) est connecté à un port du deuxième condensateur de stockage d'énergie et de filtrage (C62) ; un autre port du deuxième condensateur de stockage d'énergie et de filtrage (C62) est connecté à un autre port de la quatrième unité de commutation ; et un autre port de la quatrième unité de commutation est connectée à la prise centrale de l'enroulement secondaire du transformateur.

4. Appareil d'alimentation électrique C.C.-C.C. selon la revendication 1, dans lequel :
le port de sortie de tension de l'enroulement secondaire du transformateur est un port de sortie d'alternance positive de l'enroulement secondaire du transformateur ;
et
le circuit redresseur dévolteur comprend en outre :
une cinquième unité de commutation (Q127), dans lequel : un port de la cinquième unité de commutation (Q127) est connecté à un port de sortie d'alternance négative de l'enroulement secondaire du transformateur, et un autre port est connecté à un port de la troisième unité de commutation (Q29) connectée à la première unité de commutation bidirectionnelle contrôlable (206).

5. Appareil d'alimentation électrique C.C.-C.C. selon la revendication 1, dans lequel :
le port de sortie de tension de l'enroulement secondaire du transformateur est un port de sortie d'alternance négative de l'enroulement secondaire du transformateur ; et
le circuit redresseur dévolteur comprend en outre :
une sixième unité de commutation, dans lequel : un port de la sixième unité de commutation est connecté à un port de sortie d'alternance positive de l'enroulement secondaire du transformateur, et un autre port est connecté à un port de la troisième unité de commutation (Q29) connectée à la première unité de commutation bidirectionnelle contrôlable.

6. Appareil d'alimentation électrique C.C.-C.C. selon la revendication 1, dans lequel :
le port de sortie de tension de l'enroulement secondaire du transformateur est un port de sortie d'alternance positive de l'enroulement secondaire du transformateur ;
et
le circuit redresseur dévolteur comprend en outre :
une troisième bobine d'induction de stockage d'énergie et de filtrage (L132), un troisième condensateur de stockage d'énergie et de filtrage (C132), une septième unité de commutation (Q137), et une huitième unité de commutation (Q139), dans lequel : la septième unité de commutation (Q137) est connectée entre un port de sortie d'alternance négative de l'enroulement secondaire du transformateur et la huitième unité de commutation (Q139) ; un port de la troisième bobine d'induction de stockage d'énergie et de filtrage (L132) est connecté à un port de la huitième unité de commutation (Q139) connectée à la septième unité de commutation (Q137) ; un autre port de la troisième bobine d'induction de stockage d'énergie et de filtrage (L132) est connecté à un port du troisième condensateur de stockage d'énergie et de filtrage (C132) ; un autre port du condensateur de stockage d'énergie et de filtrage (C132) est connecté à un autre port de la huitième unité de commutation (Q139) ; et un autre port de la huitième unité de commutation (Q139) est connecté à la prise centrale de l'enroulement secondaire du transformateur.

7. Appareil d'alimentation électrique C.C.-C.C. selon la revendication 1, dans lequel :
le port de sortie de tension de l'enroulement secondaire du transformateur est un port de sortie d'alternance négative de l'enroulement secondaire du transformateur ;
et
le circuit redresseur dévolteur comprend en outre :
une quatrième bobine d'induction de stockage d'énergie et de filtrage, un quatrième condensateur de stockage d'énergie et de filtrage, une neuvième unité de commutation, et une dixième unité de commutation, dans lequel : la neuvième unité de commutation est connectée entre un port de sortie d'alternance positive de l'enroulement secondaire du transformateur et la dixième unité de commutation ; un port de la quatrième bobine d'induction de stockage d'énergie et de filtrage est connecté à un port de la dixième unité de commutation connectée à la neuvième unité de commutation ; un autre port de la quatrième bobine d'induction de stockage d'énergie et de filtrage est connecté à un port du quatrième condensateur de stockage d'énergie et de filtrage ; un autre port du quatrième condensateur de stockage d'énergie et de filtrage est connecté à un autre port de la dixième unité de commutation ; et un autre port de la dixième unité de commutation est connecté à la prise centrale de l'enroulement secondaire du transformateur.

8. Appareil d'alimentation électrique C.C.-C.C. selon la revendication 1,
dans lequel la troisième unité de commutation (Q29) est l'une des unités suivantes :
transistor à effet de champ à semi-conducteur métal oxyde, MOSFET, MOSFET bidirectionnel contrôlable, et transistor bipolaire à grille isolée, IGBT.

9. Appareil d'alimentation électrique C.C.-C.C. selon la revendication 1, dans lequel :
la première unité de commutation et la deuxième unité de commutation sont l'une quelconque des unités suivantes : transistor à effet de champ à semi-conducteur métal oxyde, MOSFET, MOSFET bidirectionnel contrôlable, transistor bipolaire à grille isolée, IGBT et thyristor à extinction par la gâchette, GTO.

10. Appareil d'alimentation électrique C.C.-C.C. selon l'une quelconque des revendications 3 à 7, dans lequel :
la quatrième unité de commutation ou la cinquième unité de commutation ou la sixième unité de commutation ou la septième unité de commutation ou la huitième unité de commutation ou la neuvième unité de commutation ou la dixième unité de commutation est l'une des unités suivantes : transistor à effet de champ à semi-conducteur métal oxyde, MOSFET, MOSFET bidirectionnel contrôlable, transistor bipolaire à grille isolée, IGBT, thyristor à extinction par la gâchette, GTO et diode.

11. Appareil d'alimentation électrique C.C.-C.C. selon l'une quelconque des revendications 1 à 7, comprenant en outre :
une unité de conversion non isolante, couplée au circuit primaire et configurée pour convertir une tension d'entrée en une tension intermédiaire, et entrer la tension intermédiaire dans le circuit primaire.
